(19)

Europäisches
Patentamt

European
Patent Office

Office européen
des brevets

(11) **EP 4 738 944 A1**

(12) **EUROPEAN PATENT APPLICATION**
published in accordance with Art. 153(4) EPC

(43) Date of publication:
06.05.2026 Bulletin 2026/19

(21) Application number: 24842279.2

(22) Date of filing: 11.07.2024

(51) International Patent Classification (IPC):
*H04W 52/06* (2009.01)

(52) Cooperative Patent Classification (CPC):
H04W 52/06; H04W 52/14; H04W 52/18

(86) International application number:
PCT/CN2024/105027

(87) International publication number:
WO 2025/016285 (23.01.2025 Gazette 2025/04)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 18.07.2023 CN 202310882514

(71) Applicant: Huawei Technologies Co., Ltd.
Shenzhen, Guangdong 518129 (CN)

(72) Inventors:
• JIN, Yu
Shenzhen, Guangdong 518129 (CN)
• TIAN, Yang
Shenzhen, Guangdong 518129 (CN)
• CHAI, Xiaomeng
Shenzhen, Guangdong 518129 (CN)
• SUN, Yan
Shenzhen, Guangdong 518129 (CN)
• JIN, Huangping
Shenzhen, Guangdong 518129 (CN)

(74) Representative: Gill Jennings & Every LLP
The Broadgate Tower
20 Primrose Street
London EC2A 2ES (GB)

(54) **POWER CONTROL METHOD AND APPARATUS**

(57) This application discloses a power control method and apparatus. This application may be applied to a wireless communication system. The method includes: generating first information, where the first information includes precoding information, the precoding information is used to determine an uplink precoding matrix and power control information to be used by a terminal device, and the power control information is used to determine an uplink transmit power of the terminal device; and sending the first information. The precoding information is used to determine the power control information to be used by the terminal device, and the power control information may not be explicitly sent. In this way, signaling overheads can be reduced. Because the power control information is not carried by using a TPC command, precision of the power control information may not be limited by the signaling overheads, so that a corresponding design may be performed based on a system requirement. Therefore, the precision of the power control information determined by using the precoding information may be higher than precision obtained by adjusting the uplink transmit power by using the TPC command.

FIG. 7

**Description**

This application claims priority to Chinese Patent Application No. 202310882514.3, filed with the China National Intellectual Property Administration on July 18, 2023 and entitled "POWER CONTROL METHOD AND APPARATUS", which is incorporated herein by reference in its entirety.

**TECHNICAL FIELD**

This application relates to the communication field, and in particular, to a power control method and apparatus.

**BACKGROUND**

Uplink power control in a new radio (new radio, NR) system uses a technical solution combining open-loop power control with partial path loss compensation and fast closed-loop power control.

Open-loop power control means that a terminal performs, without feedback information of a base station, partial compensation based on a path loss and shadow fading of the terminal, to control an overall interference level. In a full path loss compensation manner, a higher transmit power may be provided for the terminal to compensate for the path loss, but inter-cell interference, especially a level of interference to a neighboring cell when the terminal is at a cell edge, may also increase. A function of a path loss compensation factor $\alpha$ is to allow the terminal to perform partial compensation on the path loss to reduce interference to the neighboring cell and intra-cell interference, to make a compromise between a maximum system capacity and transmission performance at the cell edge. When $\alpha=1$, it means that the terminal performs full path loss compensation on a transmitted uplink signal, so that signal-to-noise ratios of all user signals are as close as possible at a receive end. In this case, an overall capacity of the cell is reduced, but a transmission rate at the cell edge is high. To balance the overall cell capacity and the transmission performance at the cell edge, an appropriate path loss compensation factor can be selected in $0<\alpha<1$.

The closed-loop power control means that the terminal dynamically adjusts a transmit power according to a modulation and coding scheme (modulation and coding scheme, MCS) selected by the base station. The MCS of the terminal is scheduled by the base station. Setting the MCS of the terminal can quickly adjust transmit power spectrum density to achieve an effect similar to an effect of fast power control. In addition, the terminal adjusts an uplink transmit signal power by using a transmit power control (transmit power control, TPC) command carried in downlink control information (downlink control information, DCI).

A currently used closed-loop power control solution has a problem of low power control precision. Therefore, a power control solution with higher power control precision needs to be studied.

SUMMARY

Embodiments of this application disclose a power control method and apparatus, to improve precision of uplink transmit power control.

According to a first aspect, an embodiment of this application provides a power control method, where the method includes: generating first information, where the first information includes precoding information, the precoding information is used to determine an uplink precoding matrix and power control information to be used by a terminal device, and the power control information is used to determine an uplink transmit power of the terminal device; and sending the first information.

In this embodiment of this application, the precoding information is used to determine the uplink precoding matrix and the power control information to be used by the terminal device.

The precoding information is used to determine the power control information to be used by the terminal device, and the power control information may not be explicitly sent. In this way, signaling overheads can be reduced. Because the power control information is not carried by using a TPC command, precision of the power control information may not be limited by the signaling overheads, so that a corresponding design may be performed based on a system requirement. Therefore, the precision of the power control information determined by using the precoding information may be higher than precision obtained by adjusting the uplink transmit power by using the TPC command. In this way, precision of uplink transmit power control can be improved.

In a possible implementation, precision of the power control information is higher than the precision threshold. The precision threshold is greater than or equal to the precision of adjusting the uplink transmit power by using the TPC command. For example, the precision of the power control information may be configured based on an actual requirement. This is not limited herein.

In this implementation, the precision of the power control information is higher than the precision threshold, and the uplink transmit power of the terminal device is determined by using the power control information, so that precision of uplink transmit power control can be improved.

In a possible implementation, a modulus of the uplink precoding matrix is associated with the power control information. In other words, there is an association relationship between the modulus of the uplink precoding matrix and the power control information. For example, the terminal device may store the association relationship between the modulus of the uplink precoding matrix and the power control information, and determine, based on the association relationship, the power control information associated with the modulus of the uplink precoding matrix.

In this implementation, the modulus of the uplink precoding matrix is associated with the power control information, so that the terminal device obtains the power control information based on the uplink precoding matrix.

In a possible implementation, the modulus of the uplink precoding matrix is the power control information. For example, the power control information is a power adjustment value (or a power adjustment amount), and the power adjustment value is a parameter used when the terminal device determines the uplink transmit power of the terminal device.

In this implementation, the modulus of the uplink precoding matrix is the power control information, so that the terminal device obtains the power control information based on the uplink precoding matrix.

In a possible implementation, there is a correspondence (or a mapping relationship) between the modulus of the uplink precoding matrix and the power control information. For example, the correspondence between the modulus of the uplink precoding matrix and the power control information is included in a correspondence table (or a mapping relationship table). The correspondence table includes one or more groups of correspondences between of the modulus of the uplink precoding matrix and the power control information, where moduli of different uplink precoding matrices correspond to different power control information. For example, the terminal device may determine, based on the correspondence table, power control information corresponding to a modulus of any uplink precoding matrix.

In this implementation, there is a correspondence between the modulus of the uplink precoding matrix and the power control information, so that the terminal device obtains the power control information based on the uplink precoding matrix and the correspondence.

In a possible implementation, the modulus of the uplink precoding matrix and the power control information meet (or satisfy) a target function. In other words, an input of the target function is the modulus of the uplink precoding matrix, and an output is the power control information. For example, the target function is $y=f(x)$, where x is the modulus of the uplink precoding matrix, and y is the power control information. The terminal device may store or may obtain the foregoing target function, and obtain, by using the target function, the power control information corresponding to the modulus of any uplink precoding matrix. In other words, the power control information corresponding to the modulus of any uplink precoding matrix may be obtained by substituting the modulus of any uplink precoding matrix as a variable into the target function.

In this implementation, the modulus of the uplink precoding matrix and the power control information meet the target function, so that the terminal device obtains the power control information based on the uplink precoding matrix and the target function.

In a possible implementation, before generating the first information, the method further includes: compressing second information by using a precoding compression model, to obtain the precoding information, where the second information includes the uplink precoding matrix.

In this implementation, the second information is compressed by using the precoding compression model, to obtain the precoding information. This can reduce an amount of data to be transmitted, to save time-frequency resources or air interface resources.

In a possible implementation, the method further includes: receiving capability information from the terminal device; obtaining, based on the capability information, a precoding recovery model to be used by the terminal device, and sending model information to the terminal device, where the model information is used for constructing (or generating) the precoding recovery model, and the precoding recovery model corresponds to the precoding compression model.

In this implementation, obtaining, based on the capability information, the precoding recovery model to be used by the terminal device can determine the precoding recovery model that matches a capability of the terminal device, to fully utilize the capability of the terminal device.

In a possible implementation, the method further includes: receiving indication information from the terminal device, where the indication information indicates the precoding recovery model used by the terminal device; and obtaining, based on the indication information, the precoding compression model corresponding to the precoding recovery model.

In this implementation, the precoding compression model corresponding to the precoding recovery model may be accurately obtained based on the indication information.

In a possible implementation, the method further includes: sending third information, where the third information includes a threshold, and the threshold is used to determine a path loss used by the terminal device.

In this implementation, the threshold is used to determine the path loss used by the terminal device, so that the path loss can be more accurately determined.

In a possible implementation, the threshold is used to determine a path loss determining manner used by the terminal device. The path loss determining manner is a manner in which the terminal device determines a path loss between the terminal device and a network device (for example, a base station), and the path loss is used to determine the uplink transmit power of the terminal device. In other words, the path loss determining manner is a path loss determining manner used by the terminal device when the terminal device determines the uplink transmit power.

In this implementation, the threshold is used to determine a path loss determining manner used by the terminal device, so that the terminal device obtains the path loss determining manner.

In a possible implementation, the method further includes: sending third information, where the third information includes a threshold, and the threshold and the power control information are used to determine a path loss determining manner used by the terminal device. For example, a value relationship between the threshold and the power control information is used to determine the path loss determining manner used by the terminal device. For example, when the power control information is less than or equal to the threshold, the terminal device determines the path loss in a first manner; or when the power control information is greater than the threshold, the terminal device determines the path loss in a second manner. The first manner is different from the second manner. It may be understood that the first manner and the second manner are two different path loss determining manners.

In this implementation, the threshold and the power control information are used to determine the path loss determining manner used by the terminal device, so that the terminal device obtains the path loss determining manner.

According to a second aspect, an embodiment of this application provides another power control method. The method includes: receiving first information, where the first information includes precoding information, the precoding information is used to determine an uplink precoding matrix and power control information to be used by a terminal device, and the power control information is used to determine an uplink transmit power of the terminal device; and obtaining the uplink precoding matrix and the power control information based on the first information.

In this embodiment of this application, precision of the power control information determined by using precoding information may be higher than precision of adjusting the uplink transmit power by using a TPC command. The uplink transmit power of the terminal device is determined by using the power control information, so that precision of uplink transmit power control can be improved. In addition, the precoding information is used to determine the power control information to be used by the terminal device, and the power control information may not be explicitly sent. In this way, signaling overheads can be reduced.

In a possible implementation, precision of the power control information is higher than the precision threshold. The precision threshold is greater than or equal to the precision of adjusting the uplink transmit power by using the TPC command. For example, the precision of the power control information may be configured based on an actual requirement. This is not limited herein.

In this implementation, the precision of the power control information is higher than the precision threshold, and the uplink transmit power of the terminal device is determined by using the power control information, so that precision of uplink transmit power control can be improved.

In a possible implementation, a modulus of the uplink precoding matrix is associated with the power control information. In other words, there is an association relationship between the modulus of the uplink precoding matrix and the power control information. For example, the terminal device may store the association relationship between the modulus of the uplink precoding matrix and the power control information, and determine, based on the association relationship, the power control information associated with the modulus of the uplink precoding matrix. For example, the terminal device may implicitly perform power control by using the power control information and directly using the uplink precoding matrix.

In this implementation, the modulus of the uplink precoding matrix is associated with the power control information, so that the terminal device can obtain the power control information based on the uplink precoding matrix.

In a possible implementation, the modulus of the uplink precoding matrix is the power control information. For example, the power control information is a power adjustment value (or a power adjustment amount), and the power adjustment value is a parameter used when the terminal device determines the uplink transmit power of the terminal device.

In this implementation, the modulus of the uplink precoding matrix is the power control information, so that the terminal device can obtain the power control information based on the uplink precoding matrix.

In a possible implementation, there is a correspondence (or a mapping relationship) between the modulus of the uplink precoding matrix and the power control information. For example, the correspondence between the modulus of the uplink precoding matrix and the power control information is included in a correspondence table (or a mapping relationship table). The correspondence table includes one or more groups of correspondences between of the modulus of the uplink precoding matrix and the power control information, where moduli of different uplink precoding matrices correspond to different power control information. For example, the terminal device may determine, based on the correspondence table, power control information corresponding to a modulus of any uplink precoding matrix.

In this implementation, there is a correspondence between the modulus of the uplink precoding matrix and the power control information, so that the terminal device can obtain the power control information based on the uplink precoding matrix and the correspondence.

In a possible implementation, the modulus of the uplink precoding matrix and the power control information meet a target function. In other words, an input of the target function is the modulus of the uplink precoding matrix, and an output is the power control information. For example, the target function is y=f(x), where x is the modulus of the uplink precoding matrix, and y is the power control information. The terminal device may store or may obtain the foregoing target function, and obtain, by using the target function, the power control information corresponding to the modulus of any uplink precoding matrix. In other words, the power control information corresponding to the modulus of any uplink precoding matrix may be obtained by substituting the modulus of any uplink precoding matrix into the target function.

In this implementation, the modulus of the uplink precoding matrix and the power control information meet the target function, so that the terminal device can obtain the power control information based on the uplink precoding matrix and the target function.

In a possible implementation, obtaining the uplink precoding matrix and the power control information based on the first information includes: parsing the first information to obtain the uplink precoding matrix; and obtaining the power control information based on the uplink precoding matrix.

In this implementation, power control information with higher precision can be obtained based on the uplink precoding matrix.

In a possible implementation, obtaining the uplink precoding matrix and the power control information based on the first information includes: processing the precoding information by using a precoding recovery model, to obtain the uplink precoding matrix, where the precoding information is obtained by compressing second information by using a precoding compression model, the second information includes the uplink precoding matrix, and the precoding recovery model corresponds to the precoding compression model; and obtaining the power control information based on the uplink precoding matrix.

In this implementation, because the precoding information is obtained by compressing the second information by using the precoding compression model, the precoding information is processed by using the precoding recovery model, to obtain the uplink precoding matrix, so that transmission resources can be saved.

In a possible implementation, obtaining the power control information based on the uplink precoding matrix includes: obtaining the power control information associated with the modulus of the uplink precoding matrix.

In a possible implementation, obtaining the power control information based on the uplink precoding matrix includes: using the modulus of the uplink precoding matrix as the power control information.

In a possible implementation, obtaining the power control information based on the uplink precoding matrix includes: obtaining, based on the uplink precoding matrix and a first correspondence, the power control information corresponding to the uplink precoding matrix, where the first correspondence includes a correspondence between the uplink precoding matrix and the power control information.

In a possible implementation, obtaining the power control information based on the uplink precoding matrix includes: obtaining the power control information based on the uplink precoding matrix and the target function.

In a possible implementation, the method further includes: sending capability information, where the capability information is used to determine the precoding recovery model used by the terminal device; and receiving model information, where the model information is used to construct (generate) the precoding recovery model used by the terminal device.

In this implementation, the capability information is sent, and the model information is received, to construct the precoding recovery model that matches a capability.

In a possible implementation, the method further includes: sending indication information, where the indication information indicates the precoding recovery model used by the terminal device.

In this implementation, the indication information is sent, so that a network device uses the precoding compression model corresponding to the precoding recovery model.

In a possible implementation, a path loss used to determine the uplink transmit power of the terminal device is related to the power control information.

In a possible implementation, a path loss used to determine the uplink transmit power of the terminal device is related to the power control information.

In a possible implementation, a path loss used to determine the uplink transmit power of the terminal device is related to the power control information and a threshold. For example, the threshold is from the network device.

In a possible implementation, a path loss determining manner used for determining the uplink transmit power of the terminal device is related to the power control information and a threshold.

In a possible implementation, a path loss determining manner used for determining the uplink transmit power of the terminal device is determined based on a value relationship between the power control information and a threshold. For example, when the power control information is less than or equal to the threshold, the path loss determining manner used for determining the uplink transmit power of the terminal device is a first manner; or when the power control information is greater than the threshold, a path loss determining manner used for determining the uplink transmit power of the terminal device is a second manner. The first manner is different from the second manner.

In a possible implementation, the method further includes: obtaining reference signal received powers (reference signal received power, RSRP) of a plurality of downlink reference signals through measurement; when the power control information is less than or equal to a threshold, determining the path loss in a first manner; and determining the uplink transmit power based on the path loss and the power control information; or when the power control information is greater than a threshold, determining the path loss in a second manner; and determining the uplink transmit power based on the path loss and the power control information, where the second manner is different from the first manner.

In this implementation, the uplink transmit power can be more accurate.

In a possible implementation, determining the path loss in the first manner includes: determining the path loss based on an average value or a minimum value in the RSRPs of the plurality of downlink reference signals.

In a possible implementation, determining the path loss in the first manner includes: determining the path loss based on an average value of last u RSRPs in the RSRPs of the plurality of downlink reference signals sorted in order of values, where u is an integer greater than 1.

In a possible implementation, determining the path loss in the second manner includes: determining the path loss based on a maximum value in the RSRPs of the plurality of downlink reference signals.

In a possible implementation, determining the path loss in the second manner includes: determining the path loss based on an average value of first m RSRPs in the RSRPs of the plurality of downlink reference signals sorted in order of values, where m is an integer greater than 1.

In a possible implementation, the method further includes: receiving third information including the threshold.

According to a third aspect, an embodiment of this application provides a communication apparatus. The communication apparatus has a function of implementing behavior in the method embodiment in the first aspect. The communication apparatus may be a network device, or may be a component (for example, a processor, a chip, or a chip system) of the network device, or may be a logical module or software that can implement all or a part of functions of the network device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The processing module is configured to generate first information, where the first information includes precoding information, the precoding information is used to determine an uplink precoding matrix and power control information to be used by a terminal device, and the power control information is used to determine an uplink transmit power of the terminal device. The transceiver module is configured to send the first information.

In a possible implementation, the processing module is further configured to compress second information by using a precoding compression model, to obtain the precoding information, where the second information includes the uplink precoding matrix.

In a possible implementation, the transceiver module is further configured to receive capability information from the terminal device. The processing module is further configured to obtain, based on the capability information, a precoding recovery model to be used by the terminal device. The transceiver module is further configured to send model information to the terminal device, where the model information is used for constructing (or generating) the precoding recovery model, and the precoding recovery model corresponds to the precoding compression model.

In a possible implementation, the transceiver module is further configured to receive indication information from the terminal device, where the indication information indicates the precoding recovery model used by the terminal device. The processing module is further configured to obtain, based on the indication information, the precoding compression model corresponding to the precoding recovery model.

In a possible implementation, the transceiver module is further configured to send third information, where the third information includes a threshold, and the threshold is used to determine a path loss used by the terminal device.

In a possible implementation, the transceiver module is further configured to send third information, where the third information includes a threshold, and the threshold and the power control information are used to determine a path loss determining manner used by the terminal device.

For possible implementations of the communication apparatus in the third aspect, refer to the possible implementations of the first aspect.

For technical effect brought by the possible implementations of the third aspect, refer to the descriptions of the technical effect of the first aspect or the possible implementations of the first aspect.

According to a fourth aspect, an embodiment of this application provides a communication apparatus. The communication apparatus has a function of implementing behavior in the method embodiment in the second aspect. The communication apparatus may be a terminal device, or may be a component (for example, a processor, a chip, or a chip system) of the terminal device, or may be a logical module or software that can implement all or a part of functions of the terminal device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive first information, where the first information includes precoding information, the precoding information is used to determine an uplink precoding matrix and power control information to be used by a terminal device, and the power control information is used to determine an uplink transmit power of the terminal device. The processing module is configured to obtain the uplink precoding matrix and the power control information based on the first information.

In a possible implementation, the processing module is specifically configured to: parse the first information to obtain the uplink precoding matrix; and obtain the power control information based on the uplink precoding matrix.

In a possible implementation, the processing module is specifically configured to: process the precoding information by using a precoding recovery model, to obtain the uplink precoding matrix, where the precoding information is obtained by compressing second information by using a precoding compression model, the second information includes the uplink precoding matrix, and the precoding recovery model corresponds to the precoding compression model; and obtain the power control information based on the uplink precoding matrix.

In a possible implementation, the processing module is specifically configured to obtain the power control information associated with a modulus of the uplink precoding matrix.

In a possible implementation, the processing module is specifically configured to use a modulus of the uplink precoding matrix as the power control information.

In a possible implementation, the processing module is specifically configured to obtain, based on the uplink precoding matrix and a first correspondence, the power control information corresponding to the uplink precoding matrix, where the first correspondence includes a correspondence between the uplink precoding matrix and the power control information.

In a possible implementation, the processing module is specifically configured to obtain the power control information based on the uplink precoding matrix and a target function. For example, the terminal device substitutes the uplink precoding matrix as a variable into the target function, to obtain the power control information. That is, when an input of the target function is the uplink precoding matrix, an output is the power control information.

In a possible implementation, the transceiver module is further configured to: send capability information, where the capability information is used to determine the precoding recovery model used by the terminal device; and receive model information, where the model information is used to construct (generate) the precoding recovery model used by the terminal device.

In a possible implementation, the transceiver module is further configured to send indication information, where the indication information indicates the precoding recovery model used by the terminal device.

In a possible implementation, the processing module is further configured to: obtain RSRPs of a plurality of downlink reference signals through measurement; when the power control information is less than or equal to a threshold, determine the path loss in a first manner; and determine the uplink transmit power based on the path loss and the power control information; or when the power control information is greater than a threshold, determine the path loss in a second manner; and determine the uplink transmit power based on the path loss and the power control information, where the second manner is different from the first manner.

In a possible implementation, the processing module is specifically configured to determine the path loss based on an average value or a minimum value in the RSRPs of the plurality of downlink reference signals.

In a possible implementation, the processing module is specifically configured to determine the path loss based on an average value of last u RSRPs in the RSRPs of the plurality of downlink reference signals sorted in order of values, where u is an integer greater than 1.

In a possible implementation, the processing module is specifically configured to determine the path loss based on a maximum value in the RSRPs of the plurality of downlink reference signals.

In a possible implementation, the processing module is specifically configured to determine the path loss based on an average value of first m RSRPs in the RSRPs of the plurality of downlink reference signals sorted in order of values, where m is an integer greater than 1.

For possible implementations of the communication apparatus in the fourth aspect, refer to the possible implementations of the second aspect.

For technical effect brought by the possible implementations of the fourth aspect, refer to the descriptions of the technical effect of the second aspect or the possible implementations of the second aspect.

According to a fifth aspect, an embodiment of this application provides another communication apparatus. The communication apparatus includes one or more processors, and the one or more processors are configured to process data and/or information, so that the method according to any one of the first aspect or the possible implementations of the first aspect is implemented, or the method according to any one of the second aspect or the possible implementations of the second aspect is implemented.

Optionally, the communication apparatus further includes a memory, and the memory stores a program or instructions. When the program or the instructions are executed by the processor, the communication apparatus is enabled to perform the method according to any one of the first aspect and the second aspect. For example, the communication apparatus may be a chip, the processor is a processing unit in the chip, and the memory is a random access memory or a cache in the chip.

In this embodiment of this application, in a process of performing the method, a process of sending information (or a signal) in the method may be understood as a process of outputting information based on instructions of the processor. When the information is output, the processor outputs the information to a transceiver, so that the transceiver transmits the information. After the information is output by the processor, other processing may be further performed on the information before the information arrives at the transceiver. Similarly, when the processor receives input information, the transceiver receives the information, and inputs the information into the processor. Further, after the transceiver receives the information, other processing may be performed on the information before the information is input into the processor.

An operation like sending and/or receiving involved in the processor may be generally understood as an instruction output based on the processor if there is no special description, or if the operation does not conflict with an actual function or internal logic of the operation in related descriptions.

In an implementation process, the processor may be a processor specially configured to perform these methods, or may be a processor, for example, a general-purpose processor that executes computer instructions in a memory to perform these methods. For example, the processor may be further configured to execute a program stored in the memory. When the program is executed, the communication apparatus is enabled to perform the method shown any one of the first aspect or the possible implementations of the first aspect.

In a possible implementation, the memory is located outside the communication apparatus. In a possible implementation, the memory is located in the communication apparatus.

In a possible implementation, the processor and the memory may alternatively be integrated into one component, that is, the processor and the memory may alternatively be integrated together.

In a possible implementation, the communication apparatus further includes a transceiver. The transceiver is configured to: receive a signal, send a signal, or the like.

According to a sixth aspect, this application provides another communication apparatus. The communication apparatus includes a processing circuit and an interface circuit, the interface circuit is configured to obtain data or output data, and the processing circuit is configured to perform the method according to any one of the first aspect and the second aspect.

According to a seventh aspect, this application provides a computer-readable storage medium. The computer-readable storage medium stores a computer program, the computer program includes program instructions, and when the program instructions are executed, a computer is enabled to perform the method according to any one of the first aspect and the second aspect.

According to an eighth aspect, this application provides a computer program product. The computer program product includes a computer program, the computer program includes program instructions, and when the program instructions are executed, a computer is enabled to perform the method according to any one of the first aspect and the second aspect.

According to a ninth aspect, this application provides a chip, including a communication interface and a processor. The communication interface is configured: to receive and send signals of the chip, and the processor is configured to execute computer program instructions, so that a communication apparatus including the chip performs the method according to any one of the first aspect and the second aspect.

According to a tenth aspect, an embodiment of this application provides a communication system, including the communication apparatus according to any one of the third aspect or the possible implementations of the third aspect, and the communication apparatus according to any one of the fourth aspect or the possible implementations of the fourth aspect.

## BRIEF DESCRIPTION OF DRAWINGS

To describe the technical solutions in embodiments of this application or in the background more clearly, the following briefly describes the accompanying drawings for describing embodiments of this application or the background.

FIG. 1 is an example of a diagram of a neuron structure according to an embodiment of this application;
FIG. 2 is an example of a diagram of a layer relationship of a neural network according to an embodiment of this application;
FIG. 3 is an example of a diagram of a structure of an AE according to an embodiment of this application;
FIG. 4A and FIG. 4B are diagrams of an architecture of a communication system to which an embodiment of this application is applicable;
FIG. 4C is a diagram of a possible application framework in a communication system;
FIG. 4D is a diagram of a possible application framework in a communication system;

FIG. 5 is an example of a diagram of structures of a precoding compression model and a precoding recovery model according to an embodiment of this application;

FIG. 6 shows an example of joint indication of precoding and power control information, namely, an example of jointly indicating precoding and power control information according to an embodiment of this application;

FIG. 7 is an interaction flowchart of a power control method according to an embodiment of this application;

FIG. 8 is an interaction flowchart of another power control method according to an embodiment of this application;

FIG. 9 is an interaction flowchart of another power control method according to an embodiment of this application;

FIG. 10 is an interaction flowchart of another power control method according to an embodiment of this application;

FIG. 11 is an interaction flowchart of another power control method according to an embodiment of this application;

FIG. 12A and FIG. 12B are simulation diagrams of a cumulative distribution function of an uplink throughput according to an embodiment of this application;

FIG. 13 is a diagram of a structure of a communication apparatus 1300 according to an embodiment of this application;

FIG. 14 is a diagram of a structure of another communication apparatus 140 according to an embodiment of this application; and

FIG. 15 is a diagram of a structure of another communication apparatus 150 according to an embodiment of this application.

DESCRIPTION OF EMBODIMENTS

The terms "first", "second", and the like in the specification, claims, and accompanying drawings of this application are used to distinguish between different objects, but are not used to describe a specific sequence. It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described herein may be combined with other embodiments.

Terms used in the following embodiments of this application are merely intended to describe specific embodiments, but are not intended to limit this application. The terms "one", "a", "an", "the", and "this" of singular forms used in this specification and the appended claims of this application are also intended to include plural forms, unless otherwise specified in the context clearly. It should also be understood that the term "and/or" used in this application means and includes any or all possible combinations of one or more listed items. For example, "A and/or B" may represent three cases: Only A exists, only B exists, and both A and B exist, where A and B may be singular or plural. The term "a plurality of" used in this application means two or more. In text descriptions of this application, the character "/" generally represents an "or" relationship between associated objects.

It may be understood that in embodiments of this application, "B corresponding to A" indicates that there is a correspondence between A and B, and B may be determined based on A. However, it should be further understood that determining (or generating) B based on (or according to) A does not mean that B is determined (or generated) based only on (or according to) A, and B may alternatively be determined (or generated) based on (or according to) A and/or other information.

It should be understood that, in this application, the indication includes a direct indication (also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured.

It should be understood that, in this application, that information C is used to determine information D includes that the information D is determined only based on the information C, and also includes that the information D is determined based on the information C and other information. In addition, that information C is used to determine information D may further include an indirect determining case. For example, the information D is determined based on information E, and the information E is determined based on the information C.

In addition, in embodiments of this application, that "a network element A sends information A to a network element B" may be understood as that a destination end of the information A or an intermediate network element in a transmission path between the network element A and the destination end is the network element B, and may include directly or indirectly sending information to the network element B; and that "a network element B receives information A from a network element A" may be understood as that a source end of the information A or an intermediate network element in a transmission path between the network element B and the source end is the network element A, and may include directly or indirectly receiving information from the network element A. Information may undergo necessary processing, for example, a format change, between the source end for sending the information and the destination end. However, the destination end may understand valid information from the source end. Similar descriptions in this application may be understood similarly, and details are not described herein.

For ease of understanding the solutions of this application, the following first describes terms and technical solutions in embodiments of this application.

**Artificial intelligence, machine learning, artificial intelligence (artificial intelligence, AI) model, and neural network**

AI is intelligence presented by machines made by people. Generally, the artificial intelligence is a technology that presents human intelligence by using a normal computer program. Artificial intelligence is to enable machines to have human intelligence, and use computer software and hardware to simulate some intelligent human behavior. Artificial intelligence includes machine learning and many other methods. Artificial intelligence can be defined as a machine or computer that mimics human beings and that has cognitive functions related to human thinking. The artificial intelligence can learn from past experience, make reasonable decisions, and respond quickly. An objective of the artificial intelligence is to understand intelligence by building symbolic reasoning or computer programs for reasoning.

The machine learning is a way to implement artificial intelligence, that is, to resolve problems in the artificial intelligence by using the machine learning as a means. A machine learning theory is mainly to design and analyze some algorithms that enable a computer to automatically "learn". A machine learning algorithm is an algorithm that automatically analyzes data to obtain a rule and uses the rule to predict unknown data. Because the learning algorithm involves a large quantity of statistical theories, the machine learning is closely related to inferential statistics and is also referred to as statistical learning theory. Machine learning is to learn of a model or rule from raw data. There are many different machine learning methods such as methods using a neural network (neural network, NN), a decision tree, and a support vector machine.

An AI model is an algorithm or a computer program that can implement an AI function. The AI model represents a mapping relationship between an input and an output of the model. In other words, the AI model is a function model that maps an input of a specific dimension to an output of a specific dimension. A model parameter of the AI model is obtained through machine learning training. For example, $h(g) = ag^2 + b$ is a quadratic function model, which may be considered as an AI model, and a and b are model parameters, and may be obtained through machine learning training. The AI model may be a neural network or another machine learning model.

A neural network is a specific implementation form of machine learning. According to the general approximation theorem, the neural network can approximate any continuous function in theory, so that the neural network has the capability of learning any mapping. Therefore, the neural network can accurately perform abstract modeling for a complex high-dimension problem.

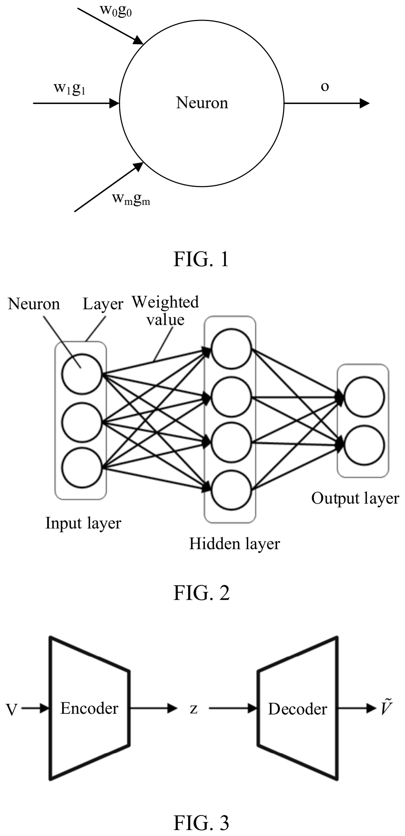

The idea of the neural network comes from the neuron structure of brain tissue. Each neuron performs a weighted summation operation on input values of the neuron, and outputs a result of the weighted summation through an activation function. FIG. 1 is an example of a diagram of a neuron structure according to an embodiment of this application. As shown in FIG. 1, an input of a neuron is $g = [g_0, g_1, ..., g_m]$, weights corresponding to inputs are respectively $w = [w, w_1, ..., w_m]$, and an offset of weighted summation is b. Forms of an activation function may be diversified. It is assumed that an activation function of a neuron is o = $h(g)$ = max (0, $z$). In this case, an output of the neuron is

$$o = h\left(\sum_{d=0}^{d=m} w_d * g_d + b\right) = \max\left(0, \sum_{d=0}^{d=m} w_d * g_d + b\right).$$ For another example, an activation function of a neuron is o = $h(z)$ = z, and an output of the neuron is $o = h\left(\sum_{d=0}^{d=m} w_d * g_d + b\right) = \sum_{d=0}^{d=m} w_d * g_d + b$, where b may be any possible value, for example, a decimal, an integer (0, a positive integer, or a negative integer), or a complex number. Activation functions of different neurons in the neural network may be the same or different.

The neural network generally includes a multi-layer structure, and each layer may include one or more neurons. Increasing a depth and/or a width of the neural network can improve an expression capability of the neural network, and provide more powerful information extraction and abstract modeling capabilities for complex systems. The depth of the neural network may refer to a quantity of layers included in the neural network, and a quantity of neurons included in each layer may be referred to as a width of the layer. In an implementation, the neural network includes an input layer and an output layer. After performing neuron processing on a received input, the input layer of the neural network transfers a result to the output layer, and the output layer obtains an output result of the neural network. In another implementation, the neural network includes an input layer, a hidden layer, and an output layer. FIG. 2 is an example of a diagram of a layer relationship of a neural network according to an embodiment of this application. As shown in FIG. 2, the neural network includes an input layer, a hidden layer, and an output layer. The input layer of the neural network processes a received input through a neuron, and then transfers a result to the intermediate hidden layer. The hidden layer transfers a calculation result to the output layer or an adjacent hidden layer. Finally, the output layer obtains an output result of the neural network. One neural network may include one hidden layer or a plurality of hidden layers that are sequentially connected. This is not limited. During training of the neural network, a loss function may be defined. The loss function describes a difference or a discrepancy between an output value of the neural network and an ideal target value (or a real value). A specific form of the loss function is not limited in this application. The training process of the neural network is a process of adjusting neural network parameters such as a quantity of layers and a width of the neural network, a weight of a neuron, and/or a parameter in an activation function of a neuron, so that a value of a loss function is less than a threshold or meets a target requirement. The threshold may be set based on an actual requirement. This is not limited.

**Auto-encoder (auto-encoder, AE) model**

An AE model includes two sub-models: an encoder (encoder) and a decoder (decoder). An AE may generally refer to a network structure including two sub-models. The AE model may also be referred to as a bilateral model, a two-sided (two-sided) model, a collaboration model, or the like. The encoder and the decoder of the AE are usually trained together and may be used collaboratively.

**Two-sided model**

The two-sided model may also be referred to as a bilateral model, a collaboration model, a couple model, or the like. In this application, the two-sided model is an AI model formed by combining two or more sub-AI models. However, a plurality of sub-AI models are not deployed on a same node, but are distributed on two or more nodes. The plurality of sub-AI models forming the AI model need to match each other. An auto-encoder (auto-encoder, AE) in which an encoder and a decoder are deployed on different nodes is a typical two-sided model. The encoder and the decoder of the AE need to match each other. That is, the decoder can understand an output of the encoder and decode the output of the encoder to an expected output. FIG. 3 is an example of a diagram of a structure of an AE according to an embodiment of this application. As shown in FIG. 3, an input of an encoder of the AE is V, an output of the encoder of the AE is z, an input of a decoder of the AE is z, and an output of the decoder of the AE is V'. V' is obtained by decoding, by the decoder of the AE, z output by the encoder of the AE, and V' is an expected output of the AE.

**Data collection**

AI is a data-based technology. An AI model needs to be trained before being used. Model training means training a model parameter of the AI model by using an optimization algorithm and a training dataset, so that a loss function value of the AI model is minimized on the training dataset. Before model training, a proper loss function need to be selected to obtain a required AI model through effective training. Data collection is a process of building a training dataset. In the field of wireless communication, data collection may be collecting simulation data by using a simulation platform, or may be collecting experimental data in an experimental scenario, or may be collecting actual test data in an actual wireless communication network. Due to different geographical environments and channel conditions (such as indoor, outdoor, a moving speed, a frequency band, and an antenna configuration), collected channel state information (channel state information, CSI) data needs to be classified during data collection. For example, data with a same channel propagation environment and a same antenna configuration is classified into one type. In this application, data collection is collecting measured data in the actual wireless communication network and constructing a training dataset.

**Uplink precoding technology**

The uplink precoding technology is an important way to improve an uplink communication rate. In the uplink precoding technology, different weights are assigned to data sent on each antenna of a terminal device to implement beamforming, so that a signal sent by the terminal device better matches a channel condition between the terminal device and a base station. In this application, the base station is used as an example of a network device (or a network side device). For example, assuming that a signal to be sent by the terminal device is X, an uplink channel is H, an uplink precoding matrix is V, and noise is N, an uplink signal Y received by the base station is Y=HVX+N.

It should be understood that, enabling the terminal device to obtain the accurate V and complete precoding of the transmitted signal X is an important guarantee of an uplink precoding matrix gain. Because the calculated precoding V needs to match H, generally, the base station first estimates the uplink channel H, calculates the corresponding precoding V, and then notifies the terminal device of the precoding V for uplink communication. A format of V is usually a complex array, that is, $V=[v_1, v_2, ..., v_M]^T$, where M is a quantity of antennas of UE, $v_j$ is a weight assigned to a $j^{th}$ antenna, and $v_j$ is a floating-point complex number. M is an integer greater than 1.

## Uplink power control

Uplink power control in an NR system uses a technical solution combining open-loop power control with partial path loss compensation and fast closed-loop power control. Open-loop power control compensates for a signal loss caused by a path loss and shadow fading by adjusting power to meet a requirement on a target signal to interference plus noise ratio (signal to interference plus noise ratio, SINR) of a signal. The SINR is a ratio of power spectrum density (power spectrum density, PSD) to interference and additive noise of received signal. An uplink channel implements power control by maintaining PSD of a signal in a transmit bandwidth. Fast closed-loop power control compensates, based on a requirement on a block error ratio (block error ratio, BLER) of a transmission service, for channel fading and interference by quickly adjusting the power spectrum density. Closed-loop power control is mainly determined based on selected MCS and path loss (including shadow fading) measurement.

When performing uplink transmission, in addition to completing physical layer power control, the terminal device may report a power headroom report (power headroom report, PHR) of the terminal device to a network. PH (power headroom) indicates a difference between a current transmit power of the terminal device and a maximum allowed transmit power. For details, refer to a formula (1).

$$PH = P_{CMAX} - P_{PUSCH} \qquad (1)$$

$P_{CMAX}$ represents the maximum allowed transmit power of the terminal device, and $P_{PUSCH}$ represents the current transmit power of the terminal device. A transmit power of the terminal device on a PUSCH channel is calculated by using a power control formula. A PHR mechanism includes a real PHR and a virtual PHR. When PUSCH or SRS transmission occurs, the terminal device reports a real PHR to the base station. If no PUSCH or SRS transmission occurs, the terminal device calculates a reference PHR for the base station based on a pre-agreed PUSCH and SRS format, where the reference PHR is referred to as a virtual PHR. The base station may determine, based on power headroom information of the terminal device, a bandwidth in which the terminal device can perform sending, and the like. The real PHR may be understood as a PHR reported by the terminal device to the base station when the terminal device performs PUSCH or SRS transmission. The virtual PHR may be understood as a PHR reported by the terminal device to the base station when the terminal device does not perform PUSCH or SRS transmission.

As described in the background, a currently used closed-loop power control solution has a problem of low power control precision. Therefore, a power control solution with higher power control precision needs to be studied. This application provides a power control solution with higher power control precision. The following describes a communication system to which the power control solution provided in this application is applicable.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system, for example, a 6th generation (6th generation, 6G) mobile communication system, or a system integrating a plurality of systems. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system. The power control solution provided in embodiments of this application is also applicable to another communication system in which a network device indicates an uplink precoding matrix to a terminal device. The foregoing communication system to which the power control solution provided in embodiments of this application is applicable is merely an example for description. A communication system to which the power control solution provided in this application is applicable is not limited thereto. This is uniformly described herein, and details are not described below again.

A first device in the communication system may send a signal to a second device or receive a signal from a third device. The signal may include information, signaling, data, or the like. The device may alternatively be replaced with an entity, a network entity, a communication device, a communication module, a node, a communication node, or the like. In this disclosure, a network element is used as an example for description. The first device may be a network device or a terminal device, the second device may be a network device or a terminal device, and the third device may be a network device or a terminal device. For example, the communication system may include at least one terminal device and at least one network device. The network device may send a downlink signal to the terminal device, and/or the terminal device may send an uplink signal to the network device. It may be understood that the terminal device in this disclosure may be replaced with the first device, the network device may be replaced with the second device, and the terminal device and the network device perform a corresponding communication method in this disclosure.

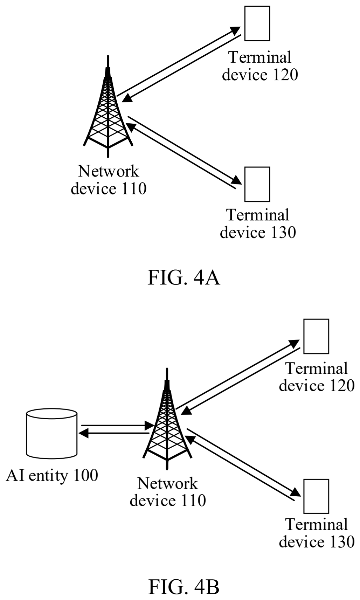

FIG. 4A and FIG. 4B are diagrams of an architecture of a communication system to which an embodiment of this application is applicable. As shown in FIG. 4A and FIG. 4B, the communication system includes a network device 110, a terminal device 120, and a terminal device 130. The communication system to which embodiments of this application may be applicable includes one or more terminal devices. The terminal device 120 and the terminal device 130 are used as examples of the terminal devices in the communication system. FIG. 4A and FIG. 4B are merely diagrams. Quantities of network devices and terminal devices included in the communication system are not limited in embodiments of this application.

The terminal device 120 and the terminal device 130 may access the network device 110, and communicate with the network device 110. In addition, as shown in FIG. 4B, the communication system may further include an AI entity 100. The network device may forward, to the AI entity, data that is related to the AI model and that is reported by the terminal device. The AI entity performs AI-related operations such as training dataset construction and model training, and forwards outputs of the AI-related operations, for example, a trained neural network model, model evaluation, and a test result, to each terminal device by using the network device. If the AI entity is located inside the network device, that is, the AI entity is a module in the network device, a system architecture is shown in FIG. 4A.

In embodiments of this application, the terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice or data, for example, a handheld device or a vehicle-mounted device with a wireless connection function. Currently, some examples of a terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, a terminal device in a future evolved public land mobile communication network (public land mobile network, PLMN), or the like. This is not limited in embodiments of this application.

By way of example, and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In this embodiment of this application, an apparatus configured to implement a function of the terminal device may be the terminal device, or may be an apparatus that can support the terminal device in implementing the function, such as a chip system, where the apparatus may be installed in the terminal device or used in matching with the terminal device. In this embodiment of this application, the chip system may include a chip, or may include a chip and another discrete component. In embodiments of this application, an example in which the apparatus for implementing the function of the terminal device is a terminal device is merely used for description, and constitutes no limitation on the solutions in embodiments of this application.

In embodiments of this application, the network device may be a device for communicating with the terminal device. The network device may also be referred to as an access network device or a radio access network device. For example, the network device may be a base station. In embodiments of this application, the network device may be a radio access network (radio access network, RAN) node (or device) that connects the terminal device to a wireless network. The base station may cover any of the following names in a broad sense, or may be replaced with the following names: for example, a RAN node, a NodeB (NodeB), an evolved NodeB (evolved NodeB, eNB), a next-generation NodeB (next-generation NodeB, gNB), a relay station, an access point, a transmission and reception point (transmission and reception point, TRP), a transmission point (transmitting point, TP), a primary station, a secondary station, a multistandard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), and a positioning node. The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. Optionally, the RAN node may alternatively be a server, a wearable device, a vehicle, a vehicle-mounted device, or the like. For example, the access network device in a vehicle to everything (vehicle to everything, V2X) technology may be a road side unit (road side unit, RSU). A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In some deployments, the network device mentioned in embodiments of this application may be a device including a CU or a DU, a device including a CU and a DU, or a device including a CU control plane node (a central unit-control plane (central unit-control plane, CU-CP)), a CU user plane node (a central unit-user plane (central unit-user plane, CU-UP)), and a DU node. For example, the network device may include a gNB-CU-CP, a gNB-CU-UP, and a gNB-DU.

In some deployments, a plurality of RAN nodes cooperate to assist the terminal in implementing radio access, and different RAN nodes separately implement some functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more categories of fronthaul interfaces, and different fronthaul interfaces correspond to DUs and RUs with different functions. If a fronthaul interface between the DU and the RU is a common public radio interface (common public radio interface, CPRI), the DU is configured to implement one or more baseband functions, and the RU is configured to implement one or more radio frequency functions. If the fronthaul interface between the DU and the RU is another type of interface, relative to the CPRI, some downlink and/or uplink baseband functions, for example, for downlink, one or more of precoding (precoding), digital beamforming (beamforming, BF), or inverse fast Fourier transformation (inverse fast Fourier transform, IFFT)/cyclic prefix (cyclic prefix, CP) addition are moved from the DU to the RU for implementation, and for uplink, one or more of digital beamforming (beamforming, BF) or fast Fourier transform (fast Fourier transform, IFFT)/cyclic prefix (cyclic prefix, CP) removing are moved from the DU to the RU for implementation. In a possible implementation, the interface may be an enhanced common public radio interface (enhanced common public radio interface, eCPRI). In this eCPRI-based architecture, split modes between the DU and RU are different, and correspond to different categories of eCPRIs (category, Cat), for example, eCPRI Cat A, B, C, D, E, F.

The eCPRI Cat A is used as an example. For downlink transmission, splitting is performed at layer mapping. The DU is configured to implement the layer mapping and one or more functions before the layer mapping (to be specific, one or more of encoding, rate matching, scrambling, modulation, and the layer mapping), and other functions (for example, one or more of RE mapping, digital beamforming (beamforming, BF), or inverse fast Fourier transform (inverse fast Fourier transform, IFFT)/cyclic prefix (cyclic prefix, CP) addition) after the layer mapping are moved to the RU for implementation. For uplink transmission, splitting is performed at RE demapping. The DU is configured to implement the demapping and one or more functions before the demapping (to be specific, one or more of the following functions: decoding, de-rate matching, descrambling, demodulation, inverse discrete Fourier transform (inverse discrete Fourier transform, IDFT), channel equalization, and the RE demapping), and other functions (for example, one or more of digital BF or fast Fourier transform (FFT)/CP removal) after the demapping are moved to the RU for implementation. It can be understood that, for function descriptions of DUs and RUs corresponding to various categories of eCPRIs, reference may be made to the eCPRI protocol. Details are not described herein.

In a possible design, a processing unit for implementing a baseband function in the BBU is referred to as a baseband high (baseband high, BBH) unit, and a processing unit for implementing a baseband function in the RRU, the AAU, or the RRH is referred to as a baseband low (baseband low, BBL) unit.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP and the CU-UP), the DU, and the RU in this application may be implemented by using a software module, a hardware module, or a combination of a software module and a hardware module.

In embodiments of this application, an apparatus for implementing a function of the network device may be a network device, or may be an apparatus that can support a network device in implementing the function, for example, a chip system, a hardware circuit, a software module, or a combination of a hardware circuit and a software module, where The apparatus may be mounted in the network device or used in conjunction with the network device. In embodiments of this application, an example in which the apparatus for implementing the function of the network device is a network device is merely used for description, and constitutes no limitation on the solutions in embodiments of this application.

It should be noted that a network architecture described in embodiments of this application is intended to describe the technical solutions in embodiments of this application more clearly, and does not constitute limitations to the technical solutions in embodiments of this application. A person of ordinary skill in the art can know that, as a network architecture evolves and a new service scenario emerges, the technical solutions provided in embodiments of this application are also applicable to similar technical issues.

In embodiments of this application, an apparatus for implementing a function of the network device may be a network device, or may be an apparatus that can support the network device in implementing the function, for example, a chip system. The apparatus may be mounted in the network device or used in conjunction with the network device. In the following embodiments, the power control solution provided in embodiments of this application is described by using an example in which the apparatus configured to implement the function of the network device is a network device, and the network device is a base station.

To support the AI technology in a wireless network, an AI node may be further introduced into the network.

Optionally, the AI node may be deployed at one or more of the following positions in the communication system: an access network device, a terminal device, a core network device, or the like. Alternatively, the AI node may be independently deployed, for example, deployed at a position other than any one of the foregoing devices, for example, a host or a cloud server in an over the top (over the top, OTT) system. The AI node may communicate with other devices in the communication system. The other devices may be, for example, one or more of the following: a network device, a terminal device, a network element of a core network, or the like.

It can be understood that a quantity of AI nodes is not limited in this application. For example, when there are a plurality of AI nodes, the plurality of AI nodes may be obtained through division based on functions. For example, different AI nodes are responsible for different functions.

It can be further understood that the AI nodes may be independent devices, or may be integrated into a same device to implement different functions, or may be network elements in a hardware device, or may be software functions running on dedicated hardware, or may be virtualized functions instantiated on a platform (for example, a cloud platform). A specific form of the AI node is not limited in this application.

The AI node may be an AI network element or an AI module.

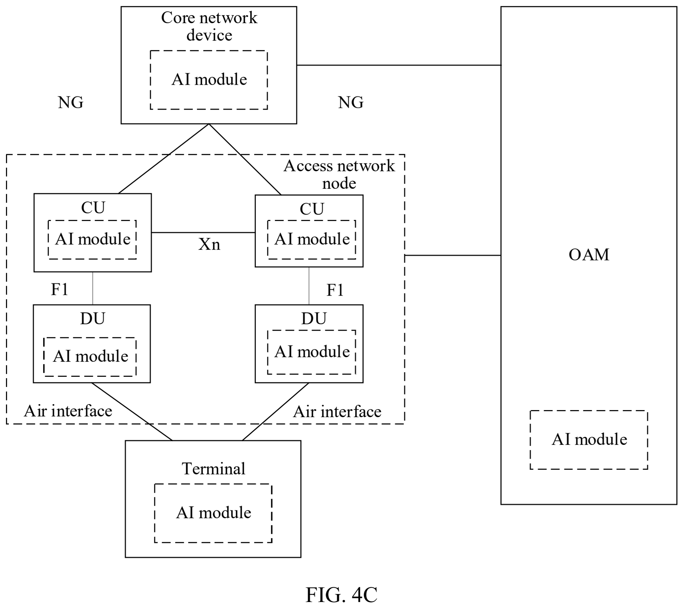

FIG. 4C is a diagram of a possible application framework in a communication system. As shown in FIG. 4C, network elements in the communication system are connected to each other through an interface (for example, NG or Xn) or an air interface. One or more AI modules (for clarity, only one AI module is shown in FIG. 4C) are deployed on these network element nodes, for example, one or more of the following devices: a core network device, an access network node (RAN node), a terminal, or an OAM. The access network node may serve as an independent RAN node, or may include a plurality of RAN nodes, for example, include a CU and a DU. One or more AI modules may also be deployed in the CU and/or the DU. Optionally, the CU may be further split into a CU-CP and a CU-UP. One or more AI models are deployed in the CU-CP and/or the CU-UP.

The AI module is configured to implement a corresponding AI function. AI modules deployed in different network elements may be the same or different. A model of the AI module is configured based on different parameters, and the AI module may implement different functions. The model of the AI module may be configured based on one or more of the following parameters: a structure parameter (for example, at least one of the following: a quantity of layers of a neural network, a width of a neural network, a connection relationship between layers, a weight of a neuron, an activation function of a neuron, or a bias in an activation function), an input parameter (for example, a type of the input parameter and/or a dimension of the input parameter), or an output parameter (for example, a type of the output parameter and/or a dimension of the output parameter). The bias in the activation function may also be referred to as a bias of a neural network.

One AI module may have one or more models. One model may obtain one output through inference, where the output includes one or more parameters. Learning processes, training processes, or inference processes of different models may be deployed on different nodes or devices, or may be deployed on a same node or device.

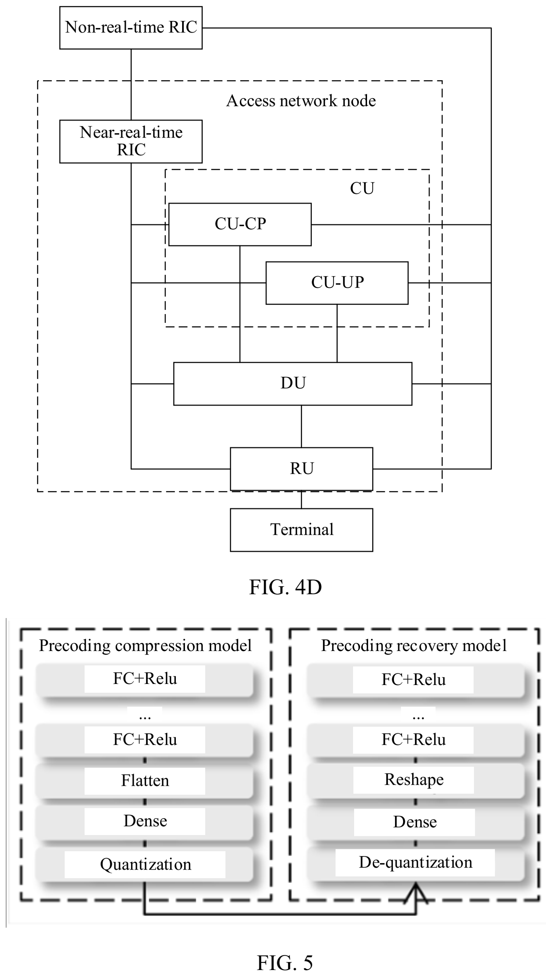

FIG. 4D is a diagram of a possible application framework in a communication system. As shown in FIG. 4D, the communication system includes a RAN intelligent controller (RAN intelligent controller, RIC). For example, the RIC may be AI modules 117 and 118 shown in FIG. 4C, and is configured to implement an AI-related function. The RIC includes a near-real-time RIC (near-real-time RIC, near-RT RIC) and a non-real-time RIC (non-real-time RIC, Non-RT RIC). The non-real-time RIC mainly processes non-real-time information, for example, latency-insensitive data. A latency of the data may be several seconds. The real-time RIC mainly processes near-real-time information, for example, latency-sensitive data. A latency of the data is tens of milliseconds.

The near-real-time RIC is used for model training and inference, for example, is used to train an AI model and perform inference by using the AI model. The near-real-time RIC may obtain network-side information and/or terminal-side information from a RAN node (for example, a CU, a CU-CP, a CU-UP, a DU, and/or an RU) and/or a terminal. The information may be used as training data or inference data. Optionally, the near-real-time RIC may deliver an inference result to the RAN node and/or the terminal. Optionally, the CU and the DU may exchange an inference result, and/or the DU and the RU may exchange an inference result. For example, the near-real-time RIC delivers an inference result to the DU, and the DU sends the inference result to the RU.

The non-real-time RIC is also used for model training and inference, for example, is used to train an AI model and perform inference by using the model. The non-real-time RIC may obtain network-side information and/or terminal-side information from the RAN node (for example, the CU, the CU-CP, the CU-UP, the DU, and/or the RU) and/or the terminal. The information may be used as training data or inference data, and an inference result may be delivered to the RAN node and/or the terminal. Optionally, the CU and the DU may exchange an inference result, and/or the DU and the RU may exchange an inference result. For example, the non-real-time RIC delivers an inference result to the DU, and the DU sends the inference result to the RU.

The near-real-time RIC and the non-real-time RIC each may alternatively be independently deployed as a network element. Optionally, the near-real-time RIC and the non-real-time RIC may alternatively serve as a part of another device. For example, the near-real-time RIC is deployed on the RAN node (for example, the CU or the DU), and the non-real-time RIC is deployed on an OAM, a cloud server, a core network device, or another network device.

It should be noted that, a specific structure of an execution body of the method provided in embodiments of this application is not specifically limited in this application, provided that communication can be performed according to the method provided in embodiments of this application by running a program that records code of the method provided in embodiments of this application. The method provided in embodiments of this application may be applicable to communication between network devices, or may be applicable to communication between a terminal device and a network device, or may be applicable to communication between terminal devices. The following uses interaction between a terminal device and a network device (for example, a base station) as an example for description.

In the power control solution provided in this application, precoding and power control information are jointly designed. For example, the base station determines (or designs) power control information to be used by each user based on interference between users (namely, terminal devices), to implement joint indication of precoding and power control information. It may be understood that the base station in this application is an example of the network device. Specifically, the base station does not explicitly indicate the power control information, but sends precoding information to the terminal device. The precoding information is used to determine an uplink precoding matrix and power control information to be used by the terminal device. In other words, the precoding information jointly indicates the uplink precoding matrix and the power control information to be used by the terminal device. For example, the precoding information includes the uplink precoding matrix to be used by the terminal device, and a modulus of the uplink precoding matrix is associated with the power control information to be used by the terminal device.

For example, the base station may obtain, by using a weighted minimum mean-square error (weighted minimum mean-square error, WMMSE) algorithm or an iterative precoding detection joint optimization algorithm (generic iterative algorithm, GIA), the uplink precoding matrix (which may be referred to as precoding in the following) to be used by the terminal device, and send the precoding information to the terminal device. The precoding information is used to determine the uplink precoding matrix and the power control information to be used by the terminal device. The terminal device obtains the to-be-used precoding and power control information based on the precoding information, and then decreases/increases uplink transmit power based on the power control information, that is, implements uplink transmit power control of a user. In this application, precision of the power control information determined by the precoding information may be configured to be high precision. Therefore, the power control solution provided in this application can improve precision of uplink transmit power control. For example, power control in this embodiment of this application acts as auxiliary power control (for example, closed-loop power control), and may be implemented through a proper correction based on a power control framework.

For example, matching AI models may be deployed for the base station and the terminal device. For example, a precoding compression model is deployed for the base station, a precoding recovery model is deployed for the terminal device, and the precoding compression model deployed for the base station and the precoding recovery model deployed for the terminal device are AI models that match each other. A function of the precoding compression model is to compress precoding information and output compressed precoding information. A name of the precoding compression model is not limited. A function of the precoding recovery model is to restore (or decompress) the input compressed precoding information, and output the uncompressed precoding information. A name of the precoding compression model is not limited. For example, the precoding compression model deployed for the base station and the precoding recovery model deployed for the terminal device are one two-sided model. The precoding compression model deployed for the base station is responsible for separately compressing uplink precoding matrices of a plurality of users to obtain compressed precoding information (namely, precoding information obtained through compression) to be sent to each user. The precoding recovery model deployed for the terminal device processes the received compressed precoding information, to obtain uncompressed precoding information. It may be understood that deployment in this embodiment of this application includes disposing the AI model in the base station or the terminal device, and also includes disposing the AI model in a third-party device other than the base station or the terminal device. This is not limited herein.

For example, an input of the precoding compression model may be a precoding matrix $V_{\#k}$, and a real number vector $C_{\#k}$ with a length of L is output for a $k^{th}$ terminal device, where L is an integer greater than 1, and k is an integer greater than 0. An input of the precoding recovery model deployed for the terminal device is $C_{\#k}$, and an output is a precoding matrix $V_{\#k}$. The terminal device uses $V_{\#k}$ for the uplink precoding matrix. The precoding matrix $V_{\#k}$ is precoding information, and the real number vector $C_{\#k}$ is compressed precoding information. For example, $V_{\#k}$ may be a floating-point complex matrix generated by using a precoding algorithm like a WMMSE. It should be noted that an air interface feedback amount of the base station is determined by the length L of $C_{\#k}$, and each terminal device may have a different feedback amount L. Generally, a larger value of L indicates higher feedback precision, more channel information included in $C_{\#k}$, and better performance of precoding $V_{\#k}$ generated by the terminal device.

Structures of the precoding compression model and the precoding recovery model are not unique. An embodiment of this application provides a possible example. Refer to FIG. 5. FIG. 5 is an example of a diagram of structures of a precoding compression model and a precoding recovery model according to an embodiment of this application. As shown in FIG. 5, "FC" represents fully connected layers (fully connected layers). "Relu" represents a rectified linear unit (rectified linear unit, ReLU) function, which is an excitation function commonly used in an artificial neural network. "Flatten" represents a flattening layer, which performs a flattening operation on an array. "Dense" is used to perform linear feature extraction, and is essentially a fully connected layer. "Quantization" and "de-quantization" represent quantization and de-quantization, for example, vector quantization.

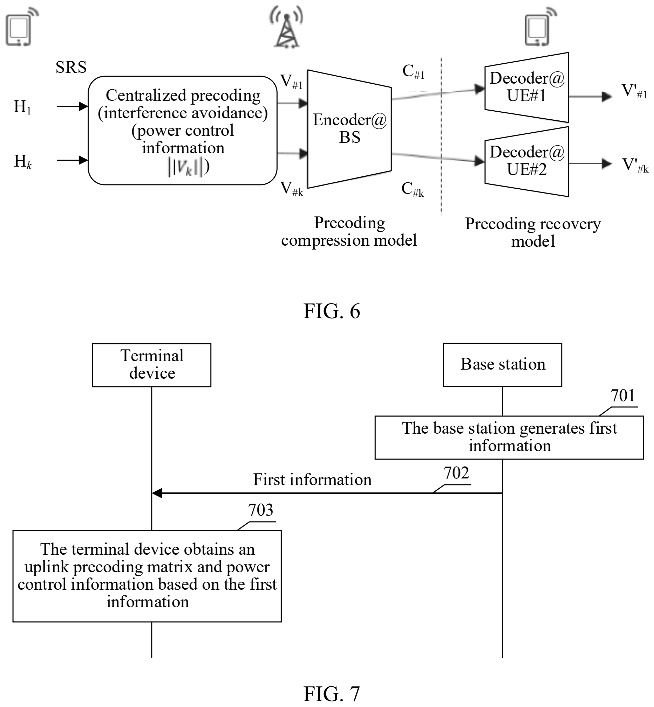

FIG. 6 shows an example of joint indication of precoding and power control information, namely, an example of jointly indicating precoding and power control information according to an embodiment of this application. In FIG. 6, $H_1$ represents an uplink channel of a first terminal device estimated by a base station, and $H_k$ represents an uplink channel of a $k^{th}$ terminal device estimated by the base station, where k is a positive integer. $V_{\#1}$ represents an uplink precoding matrix of the first terminal device determined by the base station, $C_{\#1}$ represents compressed $V_{\#1}$, and $C_{\#1}$ is an output when an input of a precoding compression model is $V_{\#1}$. $V_{\#k}$ represents an uplink precoding matrix of the $k^{th}$ terminal device determined by the base station, $C_{\#k}$ represents compressed $V_{\#k}$, and $C_{\#k}$ is an output when an input of the precoding compression model is $V_{\#k}$. An input of the precoding recovery model of the first terminal device is $C_{\#1}$, an output is $V'_{\#1}$, and $V'_{\#1}$ represents an uplink precoding matrix obtained by processing, by the first terminal device, the compressed uplink precoding matrix (namely, $C_{\#1}$) by using a precoding recovery model (in an ideal case, $V'_{\#1}$ is the same as $V_{\#1}$). An input of a precoding recovery model of the $k^{th}$ terminal device is $C_{\#k}$, an output is $V'_{\#k}$, and $V'_{\#k}$ represents an uplink precoding matrix obtained by processing, by the $k^{th}$ terminal device, a compressed uplink precoding matrix (namely, $C_{\#k}$) by using the precoding recovery model (in an ideal case, $V'_{\#k}$ is the same as $V_{\#k}$). The uplink precoding matrix may explicitly indicate power control information, so that joint indication of the uplink precoding matrix and the power control information can be implemented.

In FIG. 6, $V_{\#1}$ may indicate power control information to be used by the first terminal device, and $V_{\#k}$ may indicate power control information to be used by the $k^{th}$ terminal device. The first terminal device may obtain, based on $V'_{\#1}$, the power control information to be used by the first terminal device. For example, a modulus of $V_{\#1}$ is associated with the power control information to be used by the first terminal device. The first terminal device may determine a transmit power of the first terminal device based on power control information associated with a modulus of $V'_{\#1}$, and use $V'_{\#1}$ as the uplink precoding matrix of the first terminal device. It should be understood that, when $V'_{\#1}$ is the same as $V_{\#1}$, the power control information associated with the modulus of $V'_{\#1}$ is the same as power control information associated with a modulus of $V_{\#k}$. For example, the modulus of $V_{\#k}$ is associated with the power control information to be used by the $k^{th}$ terminal device. The $k^{th}$ terminal device may determine a transmit power of the $k^{th}$ terminal device based on power control information associated with a modulus of $V'_{\#k}$, and use $V'_{\#k}$ as the uplink precoding matrix of the $k^{th}$ terminal device. It should be understood that, when $V'_{\#k}$ is the same as $V_{\#k}$, the power control information associated with the modulus of $V'_{\#k}$ is the same as the power control information associated with the modulus of $V_{\#k}$. FIG. 6 shows only an example of joint indication of precoding and power control information of the first terminal device and an example of joint indication of precoding and power control information of the $k^{th}$ terminal device. It should be understood that the first terminal device and the $k^{th}$ terminal device are merely examples, and precoding and power control information of any one or more terminal devices may be jointly indicated in a similar manner.

For example, a procedure of jointly indicating precoding and power control information shown in FIG. 6 includes the following steps.

Step (step) 1: A terminal device sends an uplink reference signal to the base station, and the base station performs channel estimation after receiving the uplink reference signal from the terminal device, to obtain uplink channel information of the terminal device.

For example, the first terminal device sends a sounding reference signal (sounding reference signal, SRS) to the base station, and the $k^{th}$ terminal device sends an SRS to the base station. The base station performs channel estimation based on the SRS from the first terminal device, to obtain $H_1$, and performs channel estimation based on the SRS from the $k^{th}$ terminal device, to obtain $H_k$. It should be noted that the power control method provided in this embodiment of this application may also be applicable to a single-user scenario, that is, the base station indicates only an uplink precoding matrix and power control information of one terminal device.

Step 2: The base station obtains, by using a centralized precoding (may be WMMSE) solution, an uplink precoding matrix to be used by the terminal device.

For example, the base station obtains, by using a centralized precoding (may be WMMSE) solution, the precoding $V_{\#1}$ to be used by the first terminal device and the precoding $V_{\#k}$ to be used by the $k^{th}$ terminal device. In a possible implementation, a modulus of precoding to be used by the terminal device implicitly indicates power control information to be used by the terminal device. For example, a modulus $||Vk||$ of the precoding of the $k^{th}$ terminal device is associated with the power control information to be used by the $k^{th}$ terminal device.

Step 3: The base station compresses precoding of each terminal device by using a precoding compression model, and sends compressed precoding to each terminal device.

For example, the base station inputs $V_{\#1}$ to the precoding compression model for compression processing to obtain $C_{\#1}$, and sends $C_{\#1}$ to the first terminal device. The base station inputs $V_{\#k}$ to the precoding compression model for compression processing to obtain $C_{\#k}$, and sends $C_{\#k}$ to the $k^{th}$ terminal device.

Step 4: The terminal device restores the precoding by using a precoding recovery model.

For example, the first terminal device inputs $C_{\#1}$ to the precoding recovery model of the first terminal device for processing to obtain $V'_{\#1}$, and the $k^{th}$ terminal device inputs $C_{\#k}$ to the precoding recovery model of the $k^{th}$ terminal device for processing to obtain $V'_{\#k}$.

It should be noted that matching AI models, namely, precoding compression models and precoding recovery models, may be deployed for the base station and the terminal device. Matching AI models may not be deployed for the base station and the terminal device. In other words, the base station may directly send precoding information of the terminal device to the terminal device, and the precoding information is used to determine the uplink precoding matrix and the power control information to be used by the terminal device. In a possible implementation, the precoding information corresponds to a codebook in a codebook set.

FIG. 7 is an interaction flowchart of a power control method according to an embodiment of this application. As shown in FIG. 7, the method includes the following steps.

701: A base station generates first information.

The first information includes precoding information. The precoding information is used to determine an uplink precoding matrix and power control information to be used by a terminal device. That the precoding information is used to determine the uplink precoding matrix and the power control information to be used by the terminal device may be replaced with the following: The precoding information is used by the terminal device to obtain the uplink precoding matrix and the power control information to be used by the terminal device, or the precoding information is used by the terminal device to determine the uplink precoding matrix and the power control information to be used by the terminal device, or the precoding information indicates the uplink precoding matrix and the power control information to be used by the terminal device, or the precoding information includes precoding (for example, a precoding matrix) to be used by the terminal device and the precoding information is used to determine the power control information to be used by the terminal device, or the precoding information includes precoding to be used by the terminal device and the power control information implicitly indicates the precoding information to be used by the terminal device. In this application, the power control information may be referred to as a power avoidance parameter or another name.

The power control information is used to determine an uplink transmit power of the terminal device. Alternatively, the power control information is used by the terminal device to determine an uplink transmit power of the terminal device. For example, the power control information is a power adjustment value (or a power adjustment amount), and the power adjustment value is a parameter used when the terminal device determines the uplink transmit power of the terminal device.

In a possible implementation, precision of the power control information is higher than a precision threshold. The precision threshold is greater than or equal to precision of adjusting the uplink transmit power by using a TPC command. For example, the precision of the power control information may be configured based on an actual requirement, that is, the precision of the power control information may be flexibly configured. This is not limited herein. In this implementation, the precision of the power control information is higher than the precision threshold, and the uplink transmit power of the terminal device is determined by using the power control information, so that precision of uplink transmit power control can be improved.

702: The base station sends the first information to the terminal device.

Correspondingly, the terminal device receives the first information from the base station. In a possible implementation, the first information may include another power control parameter (excluding the power control information) used to determine the uplink transmit power to be used by the terminal device, for example, $P_{o,PUSCH}$, $M_{PUSCH}$ (i), and a demodulation reference signal (demodulation reference signal, DM-RS) port. $P_{o,PUSCH}$ represents a power level that is of a physical uplink shared channel (physical uplink shared channel, PUSCH) of the terminal device and that is expected by the base station. $M_{PUSCH}$ (i) represents a transmission bandwidth of an $i^{th}$ PUSCH of the terminal device. In another possible implementation, the base station further sends uplink transmission-related information to the terminal device. The uplink transmission-related information may include another power control parameter used to determine the uplink transmit power to be used by the terminal device, for example, $P_{o,PUSCH}$, $M_{PUSCH}(i)$, and a demodulation reference signal (demodulation reference signal, DM-RS) port. It may be understood that the base station sends, to the terminal device in at least the following two manners, the another power control parameter used to determine the uplink transmit power to be used by the terminal device. One manner is that the first information carries the another power control parameter. The other manner is that the base station sends the uplink transmission-related information to the terminal, and the uplink transmission-related information carries the another power control parameter.

It may be understood that the first information may include the another power control parameter used to determine the uplink transmit power to be used by the terminal device, or may not include the another power control parameter used to determine the uplink transmit power to be used by the terminal device, that is, only indicate the power control information. The terminal device may obtain, based on the power control information and the another power control parameter, the uplink transmit power to be used by the terminal device. A manner in which the base station sends the another power control parameter used to determine the uplink transmit power to be used by the terminal device is not limited in embodiments of this application.

703: The terminal device obtains the uplink precoding matrix and the power control information based on the first information.

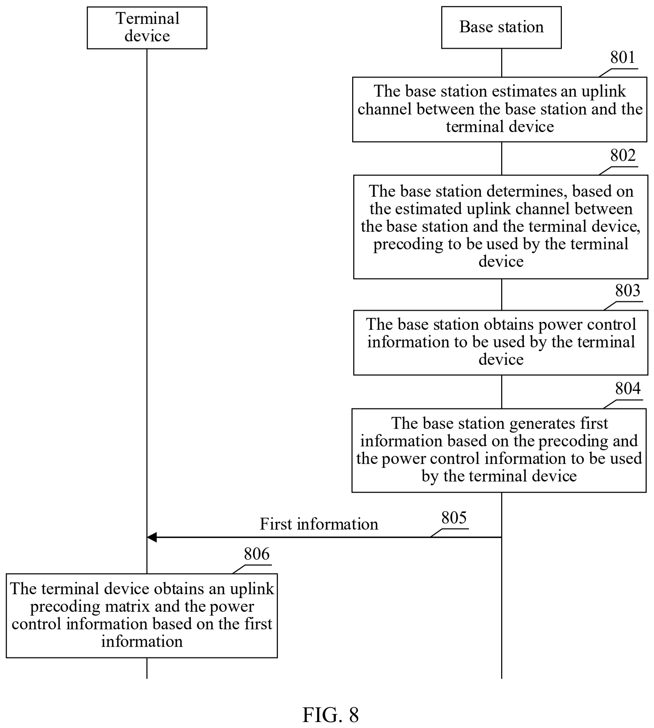

The following (the embodiment part corresponding to FIG. 8) further describes a possible implementation of step 703.

In this embodiment of this application, the precoding information is used to determine the uplink precoding matrix and the power control information to be used by the terminal device. The precision of the power control information determined by using the precoding information may be higher than the precision of adjusting the uplink transmit power by using the TPC command. Therefore, precision of uplink transmit power control can be improved. In addition, the precoding information is used to determine the power control information to be used by the terminal device, and the power control information may not be explicitly sent. In this way, signaling overheads can be reduced.

FIG. 8 is an interaction flowchart of another power control method according to an embodiment of this application. A method procedure in FIG. 8 is a possible implementation of the method described in FIG. 7. As shown in FIG. 8, the method includes the following steps.

801: A base station estimates an uplink channel between the base station and a terminal device.

For example, the base station estimates the uplink channel between the base station and the terminal device by using an uplink sounding reference signal (sounding reference signal, SRS) sent by the terminal device. For example, the terminal device sends a pilot to the base station by using the uplink SRS, and the base station implements channel estimation by using a least square (least square, LS)/minimum mean square error (minimum mean square error, MMSE) channel estimation algorithm. The base station may estimate the uplink channel between the base station and the terminal device in another manner. This is not limited in this application.

For example, the base station may further perform the following operations: determining, based on a rank indication (rank indication, RI) of the estimated uplink channel, a quantity of layers and a quantity of layers allocated to the terminal device for transmitting data; and determining, based on a channel quality indicator (channel quality indicator, CQI), a modulation order and an MCS for transmitting data by the terminal device, and a code rate of channel coding. The CQI may be fed back by the terminal device to the base station by using channel state information (channel state information, CSI). Alternatively, the base station may determine, in another manner, the modulation order and the MCS for transmitting data by the terminal device, and the code rate of channel coding. This is not limited in embodiments of this application.

802: The base station determines, based on the estimated uplink channel between the base station and the terminal device, precoding to be used by the terminal device.

803: The base station obtains power control information to be used by the terminal device.

Step 803 may be replaced with the following: The base station determines the power control information to be used by the terminal device.

The power control information may be a power adjustment value (or a power adjustment amount) to be used by the terminal device to determine an uplink transmit power of the terminal device. For example, the power control information is an adjustment amount of PUSCH transmit power of the terminal device.

In a possible implementation, the power control information is a power adjustment amount whose precision is higher than precision of a transmit power adjustment amount carried in a TPC command, and the power control information is irrelevant to the transmit power adjustment amount carried in the TPC command. That is, the power control information may replace the transmit power adjustment amount carried in the TPC command, that is, the base station may not send the TPC command to carry the transmit power adjustment amount. In other words, the terminal device can obtain a high-precision transmit power adjustment amount based on the power control information, and does not need to learn of the transmit power adjustment amount carried in the TPC command.

Herein, the following solution in which the transmit power adjustment amount is carried by using the TPC command is compared with the solution provided in this embodiment. The solution in which the transmit power adjustment amount is carried by using the TPC command is specifically as follows: It is assumed that $f(i)$ represents the transmit power adjustment amount of the terminal device. The transmit power adjustment amount may be carried in a TPC field (namely, the TPC command) in DCI. Each power control command includes 2 bits, and corresponds to four different adjustment steps, as shown in Table 1. The TPC command may be classified into two manners: a cumulative adjustment value and an absolute adjustment value.

Table 1

| TPC command field | Cumulative adjustment value | Absolute adjustment value |
|---|---|---|
| 0 | -1 | -4 |
| 1 | 0 | -1 |
| 2 | 1 | 1 |
| 3 | 3 | 4 |

In Table 1, the TPC command field (that is, a power control command) includes two 2 bits. It can be learned from Table 1 that, when the TPC command field is 00 (a value is 0), the cumulative adjustment value corresponding to the transmit power adjustment amount is -1, and the absolute adjustment value corresponding to the transmit power adjustment amount is -4. When the TPC command field is 01 (a value is 1), the cumulative adjustment value corresponding to the transmit power adjustment amount is 0, and the absolute adjustment value corresponding to the transmit power adjustment amount is -1. When the TPC command field is 10 (a value is 2), the cumulative adjustment value corresponding to the transmit power adjustment amount is 1, and the absolute adjustment value corresponding to the transmit power adjustment amount is 1. When the TPC command field is 11 (a value is 3), the cumulative adjustment value corresponding to the transmit power adjustment amount is 3, and the absolute adjustment value corresponding to the transmit power adjustment amount is 4.

It can be seen from Table 1 that, the cumulative adjustment value corresponding to the transmit power adjustment amount carried in the TPC command can only be one of -1, 0, 1, and 3, and the absolute adjustment value corresponding to the transmit power adjustment amount carried in the TPC command can only be one of -4, -1, 1, and 4. The transmit power adjustment amount carried in the TPC command has low precision. Compared with precision of the transmit power adjustment amount carried in the TPC command, precision of the transmit power adjustment amount indicated by the power control information in this embodiment of this application is higher.

The following describes an example of the transmit power adjustment amount indicated by the power control information in this embodiment of this application.

For example, in this embodiment of this application, the power control information uses a cumulative adjustment value, and the power control information is any one of the following: -2, -1.5, -1, -0.5, 0, 0.5, 1, 1.5, 2, 2.5, 3, 3.5, 4, and the like. For example, in this embodiment of this application, the power control information uses a cumulative adjustment value, and the power control information is any one of the following: -2, -1.5, -1, -0.5, 0, 0.5, 1, 1.5, 2, 2.5, 3, 3.5, 4, and the like. Optionally, each piece of power control information may correspond to one uplink precoding matrix. For example, in this embodiment of this application, the power control information uses an absolute adjustment value, and the power control information is any one of the following: -4.5, -4, -3.5, -3, -2.5, -2, -1.5, -1, -0.5, 0, 0.5, 1, 1.5, 2, 2.5, 3, 3.5, 4, 4.5, and the like. For example, in this embodiment of this application, the power control information uses an absolute adjustment value, and the power control information is any one of the following: -4.5, -4, -3.5, -3, -2.5, -2, -1.5, -1, -0.5, 0, 0.5, 1, 1.5, 2, 2.5, 3, 3.5, 4, 4.5, and the like.

In another possible implementation, the power control information is a power adjustment amount whose precision is higher than the precision of the transmit power adjustment amount carried in the TPC command, and both the transmit power adjustment amount carried in the TPC command and the power control information are used to determine the uplink transmit power of the terminal device. For example, a sum of the transmit power adjustment amount carried in the TPC command and the power control information is a power adjustment amount whose precision is higher than the precision of the transmit power adjustment amount carried in the TPC command. For example, a product of the transmit power adjustment amount carried in the TPC command and the power control information is a power adjustment amount whose precision is higher than the precision of the transmit power adjustment amount carried in the TPC command, and the power control information may be considered as a coefficient of a power adjustment amount. That is, the power control information cannot replace the transmit power adjustment amount carried in the TPC command, that is, the base station sends the TPC command to carry the transmit power adjustment amount. In other words, the terminal device obtains a high-precision transmit power adjustment amount based on the transmit power adjustment amount carried in the TPC command and the power control information.

A function of the power control information may be understood as improving the precision of the transmit power adjustment amount carried in the TPC command. For example, the base station obtains the power adjustment amount F1 to be used by the terminal device to determine the uplink transmit power of the terminal device, where F1 is a high-precision power adjustment amount. A difference between F2 (namely, $f(i)$) in the power adjustment amount that may be carried in the TPC command and F1 is the smallest. The base station obtains power control information F3 based on F1 and F2. The base station sends precoding information and a TPC command to the terminal device, where the precoding information is used to determine the uplink precoding matrix and the power control information to be used by the terminal device, and the TPC command carries F2. The terminal device obtains the uplink precoding matrix and the power control information based on the precoding information. The terminal device obtains F2 based on the TPC command. The terminal device obtains the power adjustment amount F1 based on F2 and the power control information. In this example, precision of F1 is the same as precision of the power control information, and precision of F1 is higher than precision of F2.

For example, in this embodiment of this application, the power control information uses a cumulative adjustment value, and the power control information is any one of the following: -2, -1.5, -1, -0.5, 0, 0.5, 1, 1.5, 2, 2.5, 3, 3.5, 4, and the like. For example, in this embodiment of this application, the power control information uses a cumulative adjustment value, and the power control information is any one of the following: -2, -1.5, -1, -0.5, 0, 0.5, 1, 1.5, 2, 2.5, 3, 3.5, 4, and the like. For example, in this embodiment of this application, the power control information uses an absolute adjustment value, and the power control information is any one of the following: -4.5, -4, -3.5, -3, -2.5, -2, -1.5, -1, -0.5, 0, 0.5, 1, 1.5, 2, 2.5, 3, 3.5, 4, 4.5, and the like. For example, in this embodiment of this application, the power control information uses an absolute adjustment value, and the power control information is any one of the following: -4.5, -4, -3.5, - 3, -2.5, -2, -1.5, -1, -0.5, 0, 0.5, 1, 1.5, 2, 2.5, 3, 3.5, 4, 4.5, and the like.

804: The base station generates the first information based on the precoding and the power control information to be used by the terminal device.

The first information includes the precoding information, and the precoding information is used to determine the uplink precoding matrix and the power control information to be used by the terminal device.

A possible implementation of step 804 is as follows: The base station sets (or configures), based on the power control information, a modulus of the precoding to be used by the terminal device, and generates the first information, where the modulus of the precoding is associated with the power control information. In other words, the base station may set the modulus of the precoding to be used by the terminal device, to associate the modulus of the precoding with the power control information. For example, the base station stores an association relationship (which may be referred to as a correspondence or a mapping relationship) between a modulus of the uplink precoding matrix and the power control information, and may determine, based on the association relationship, a modulus of precoding associated with any power control information. Table 2 is an association relationship table (which may be referred to as a correspondence table or a mapping relationship table) provided in this embodiment of this application. The association relationship table includes an association relationship between the modulus of the uplink precoding matrix and the power control information.

Table 2

| | |
|---|---|
| Modulus #1 of the precoding | Power control information #1 |
| Modulus #2 of the precoding | Power control information #2 |
| ... | ... |
| Modulus #K of the precoding | Power control information #K |

Refer to Table 2. The modulus #1 of the precoding is associated with the power control information #1, that is, there is an association relationship between the modulus #1 of the precoding and the power control information #1. The modulus #2 of the precoding is associated with the power control information #1. The modulus #K of the precoding is associated with the power control information #K, where K is an integer greater than 0. For example, assuming that the power control information is the power control information #1, the base station sets (or configures), based on the power control information #1 and Table 2, the modulus of the precoding to be used by the terminal device to the modulus #1 of the precoding. The terminal device may also store Table 2, and may determine, based on Table 2, the power control information #1 associated with the modulus #1 of the precoding.

Another possible implementation of step 804 is as follows: The base station sets (or configures), based on the power control information, a modulus of the precoding to be used by the terminal device, and generates the first information, where the modulus of the precoding represents (or indicates) the power control information. In other words, the base station may set the modulus of the precoding to be used by the terminal device to be equal to the power control information. For example, the power control information is the power adjustment amount #1, and the base station sets the modulus of the precoding to be used by the terminal device to the power adjustment amount #1. Correspondingly, the terminal device may use the modulus of the precoding as the power control information to be used by the terminal device.

Another possible implementation of step 804 is as follows: The base station sets (or configures), based on the power control information and a target inverse function, the modulus of the precoding to be used by the terminal device, and generates the first information, where when an input of the target inverse function is the power control information, an output is the modulus of the precoding. For example, the base station substitutes the power control information as a variable into the target inverse function, and sets the output of the target inverse function to the modulus of the precoding to be used by the terminal device. The target inverse function is an inverse function of a target function. When an input of the target function is the modulus of the precoding to be used by the terminal device, the output is the power control information. The terminal device may obtain, based on the target function and the modulus of the precoding to be used by the terminal device, the power control information to be used by the terminal device. For example, the terminal device substitutes, as a variable, the modulus of the precoding to be used by the terminal device into the target function, and uses the output of the target function as the power control information to be used by the terminal device.

805: The base station sends the first information to the terminal device.

For step 805, refer to step 702.

Because a channel condition between the base station and the terminal device is usually not fixed, the base station may send the precoding to the terminal device a plurality of times in a data transmission process with the terminal device, so that a signal sent by the terminal device matches the channel condition that changes between the terminal device and the base station. In other words, the base station may send precoding corresponding to different time periodicities to the terminal device as the channel condition between the terminal device and the base station changes. That is, steps 801 to 805 are repeated in different time periodicities based on the channel condition. For example, the base station may send the precoding content at an interval of 20 ms, or may send the precoding content at an interval of 50 ms, or may send the precoding content at an interval of 100 ms. This is not limited in this application. That the base station sends the first information to the terminal device may be understood as: The base station sends the uplink precoding matrix and the power control information to the terminal device. For example, in the data transmission process between the base station and the terminal device, step 801 to step 806 may be performed a plurality of times. For example, step 801 to step 806 are performed based on a target periodicity. The target periodicity may be 20 ms, 50 ms, or 100 ms. This is not limited in this application.

806: The terminal device obtains the uplink precoding matrix and the power control information based on the first information.

A possible implementation of step 806 is as follows: parsing the first information to obtain the uplink precoding matrix; and obtaining the power control information based on the uplink precoding matrix. In this implementation, the power control information can be obtained based on the uplink precoding matrix.

A possible implementation of step 806 is as follows: processing the precoding information by using a precoding recovery model, to obtain the uplink precoding matrix, where the precoding information is obtained by compressing second information by using a precoding compression model, the second information includes the uplink precoding matrix, and the precoding recovery model corresponds to the precoding compression model; and obtaining the power control information based on the uplink precoding matrix. In this implementation, because the precoding information is obtained by compressing the second information by using the precoding compression model, the precoding information is processed by using the precoding recovery model, to obtain the uplink precoding matrix, so that transmission resources can be saved.

In a possible implementation, the modulus of the uplink precoding matrix is associated with the power control information, that is, there is an association relationship between the modulus of the uplink precoding matrix and the power control information. Obtaining the power control information based on the uplink precoding matrix may be: obtaining the power control information associated with the modulus of the uplink precoding matrix. For example, the terminal device first determines the modulus of the uplink precoding matrix, and then obtains, based on Table 2, the power control information associated with the modulus of the uplink precoding matrix.

In a possible implementation, the modulus of the uplink precoding matrix is the power control information. Obtaining the power control information based on the uplink precoding matrix may be: determining the modulus of the uplink precoding matrix; and using the modulus of the uplink precoding matrix as the power control information.

In a possible implementation, the modulus of the uplink precoding matrix and the power control information have a correspondence (or a mapping relationship). Obtaining the power control information based on the uplink precoding matrix may be: obtaining, based on the uplink precoding matrix and a first correspondence, the power control information corresponding to the uplink precoding matrix, where the first correspondence includes a correspondence between the uplink precoding matrix and the power control information. For example, the terminal device first determines the modulus of the uplink precoding matrix, and then obtains, based on Table 2, the power control information corresponding to the modulus of the uplink precoding matrix.

In a possible implementation, the modulus of the uplink precoding matrix and the power control information meet (or meet) the target function. Obtaining the power control information based on the uplink precoding matrix may be: obtaining the power control information based on the uplink precoding matrix and the target function. For example, the terminal device substitutes the uplink precoding matrix as a variable into the target function, to obtain the power control information. That is, when the input of the target function is the uplink precoding matrix, the output is the power control information.

In this embodiment of this application, the terminal device obtains the uplink precoding matrix and the power control information based on the first information. The precision of the power control information may be higher than the precision of adjusting the uplink transmit power by using the TPC command. Therefore, the precision of the uplink transmit power control can be improved. In addition, the precoding information is used to determine the power control information to be used by the terminal device, and the power control information may not be explicitly sent. In this way, signaling overheads can be reduced.

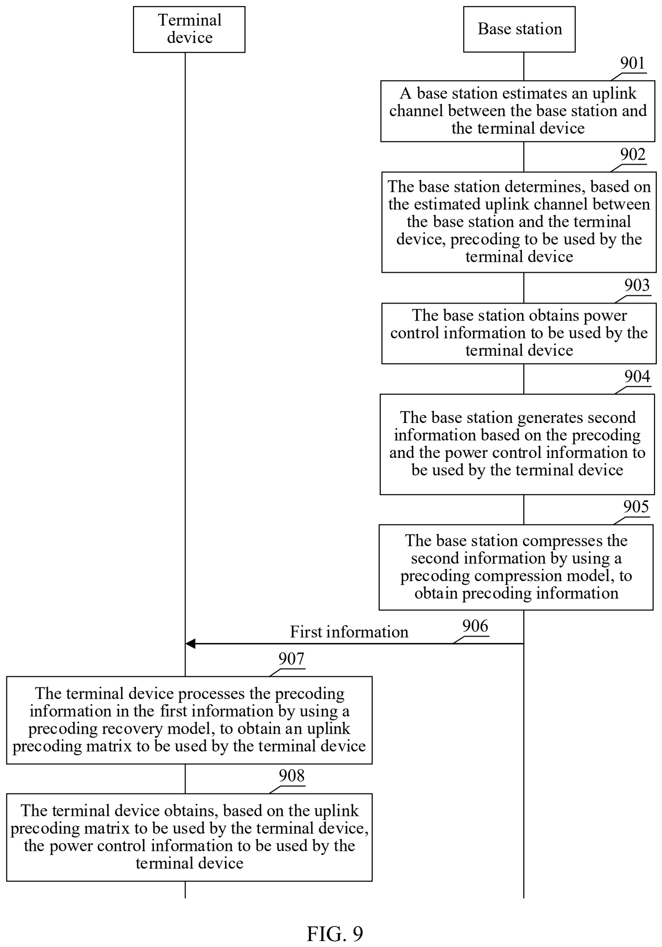

FIG. 9 is an interaction flowchart of another power control method according to an embodiment of this application. A method procedure in FIG. 9 is a possible implementation of the method described in FIG. 7. As shown in FIG. 9, the method includes the following steps.

901: A base station estimates an uplink channel between the base station and a terminal device.

902: The base station determines, based on the estimated uplink channel between the base station and the terminal device, precoding to be used by the terminal device.

903: The base station obtains power control information to be used by the terminal device.

For the step 901 to the step 903, refer to the step 801 to the step 803 in FIG. 8. Details are not described herein again.

904: The base station generates second information based on the precoding and the power control information to be used by the terminal device.

The second information may include the precoding to be used by the terminal device. For the step 904, refer to the step 804. The second information in the step 904 may be the first information in the step 804. An implementation of step 904 is not described herein. It should be noted that the first information in FIG. 9 is different from the first information in FIG. 8, and the first information in FIG. 9 may be obtained by compressing some or all content of the first information in FIG. 8.

905: The base station compresses the second information by using a precoding compression model, to obtain precoding information.

906: The base station sends first information to the terminal device.

The first information may include the precoding information obtained in the step 905. The first information may further include another power control parameter used to determine an uplink transmit power to be used by the terminal device. Correspondingly, the terminal device receives the first information from the base station.

907: The terminal device processes the precoding information in the first information by using a precoding recovery model, to obtain an uplink precoding matrix to be used by the terminal device.

908: The terminal device obtains, based on the uplink precoding matrix to be used by the terminal device, the power control information to be used by the terminal device.

For a possible implementation of the step 908, refer to the implementation of obtaining the power control information based on the uplink precoding matrix in the embodiment in FIG. 8. Details are not described herein again.

In this embodiment of this application, the terminal device compresses the second information by using the precoding compression model, to obtain the precoding information. This can reduce an amount of data to be transmitted, to save time-frequency resources or air interface resources.

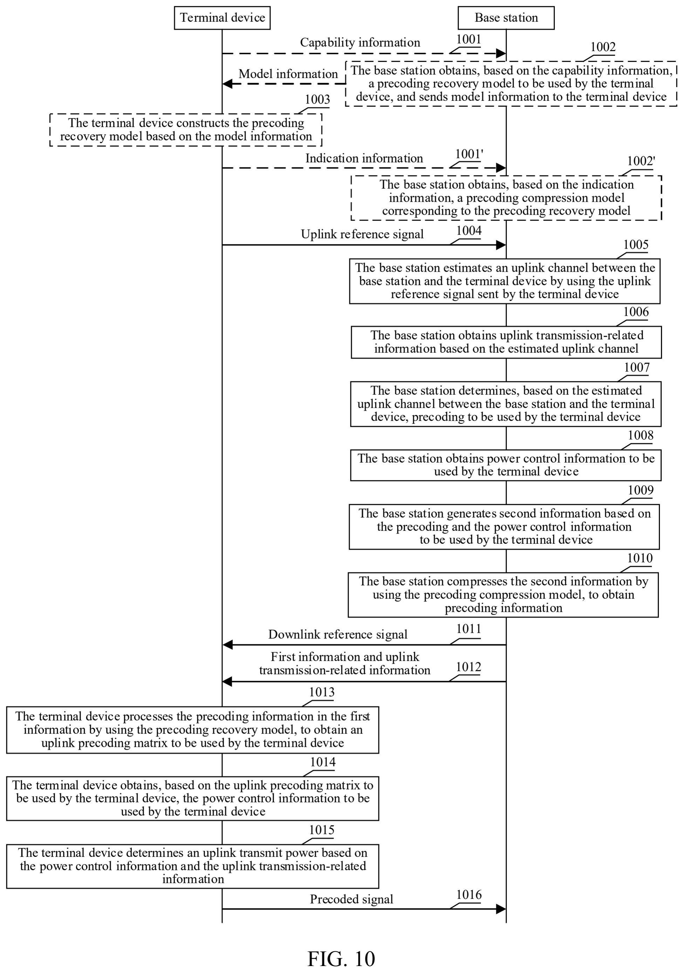

FIG. 10 is an interaction flowchart of another power control method according to an embodiment of this application. A method procedure in FIG. 10 is a possible implementation of the method described in FIG. 7. As shown in FIG. 10, the method includes the following steps.

1001: A terminal device sends capability information to a base station.

The capability information is used to determine a precoding recovery model used by the terminal device. Alternatively, the capability information is used by the base station to determine a precoding recovery model used by the terminal device. Content in the capability information may include but is not limited to: whether the terminal device supports running of an AI model, a type of a supported AI model (for example, a CNN or a random forest model), a size of an AI model stored in the terminal device, a computing power of the terminal device (a computing capability for running an AI model, for example, a computing speed of a processor and/or a data amount that can be processed by the processor), and an antenna quantity of the terminal device.

1002: The base station obtains, based on the capability information, the precoding recovery model to be used by the terminal device, and sends model information to the terminal device.

Correspondingly, the terminal device receives the model information. The model information is used to construct the foregoing precoding recovery model, and the foregoing precoding recovery model corresponds to the foregoing precoding compression model. Obtaining, by the base station based on the capability information, the precoding recovery model to be used by the terminal device may be: The base station determines, based on the capability information, the precoding recovery model that matches a capability of the terminal device. A precoding compression model used by the base station matches a precoding recovery model to be used by the terminal device. When the terminal device supports a machine learning model, the base station delivers the model information to the terminal device. For example, the base station delivers a trained precoding recovery model to a corresponding terminal device for terminal devices having different operation capabilities.

1003: The terminal device constructs the precoding recovery model based on the model information.

The step 1001 to the step 1003 may be understood as a procedure of determining a two-sided model in a mode in which the base station determines and delivers the capability of the terminal device. In other words, when the two-sided model uses the mode in which the base station determines and delivers the capability of the terminal device, the base station and the terminal device perform a procedure of the step 1001 to the step 1003.

Step 1001': The terminal device sends indication information to the base station.

The indication information indicates the precoding recovery model used by the terminal device. For example, the indication information includes a number of the precoding recovery model used by the terminal device. For example, the indication information includes the number of the precoding recovery model used by the terminal device and the antenna quantity of the terminal device. When the precoding recovery model used by the terminal device is associated (or bound) with a unique antenna quantity, the indication information may include the number of the precoding recovery model used by the terminal device, and does not include the antenna quantity of the terminal device. The base station may determine the antenna quantity of the terminal device based on the precoding recovery model used by the terminal device. For example, the antenna quantity associated with the precoding recovery model used by the terminal device is 4, and the indication information sent by the terminal device includes the number of the precoding recovery model. The base station may learn, based on the precoding recovery model, that the antenna quantity of the terminal device is 4. For example, the base station and the terminal device may agree (or negotiate) in advance on whether the precoding recovery model is associated with the unique antenna quantity. When the precoding recovery model is associated with the unique antenna quantity, the base station and the terminal device may store antenna quantities associated with different precoding recovery models.

When the precoding recovery model used by the terminal device is not associated (or bound) with the unique antenna quantity, the indication information may include the number of the precoding recovery model used by the terminal device and the antenna quantity of the terminal device. That the precoding recovery model used by the terminal device is not associated (or bound) with the unique antenna quantity means that the precoding recovery model used by the terminal device is associated with a plurality of antenna quantities or the precoding recovery model used by the terminal device is not associated with an antenna quantity. For example, the precoding recovery model used by the terminal device is not associated with an antenna quantity, and indication information sent by the terminal device includes the number of the precoding recovery model and the antenna quantity of the terminal device. The base station may learn of the antenna quantity of the terminal device based on the indication information.

Step 1002': The base station obtains, based on the indication information, the precoding compression model corresponding to the precoding recovery model.

The step 1001' and the step 1002' may be understood as a procedure of determining the two-sided model in a mode in which the terminal device reports a model number and the base station coordinates with the terminal device. In other words, when the two-sided model uses the mode in which the terminal device reports the model number and the base station coordinates with the terminal device, the base station and the terminal device perform a procedure of the step 1001' and the step 1002'. It should be noted that FIG. 10 includes the step 1001 to the step 1003 or includes the step 1001' and the step 1002'. That is, the step 1001 to the step 1003 are optional, or the step 1001' and the step 1002' are optional.

1004: The terminal device sends an uplink reference signal to the base station.

For example, the terminal device sends the SRS to the base station.

1005: The base station estimates an uplink channel between the base station and the terminal device by using the uplink reference signal sent by the terminal device.

For example, the base station estimates the uplink channel between the base station and the terminal device by using the SRS sent by the terminal device in the uplink.

1006: The base station obtains uplink transmission-related information based on the estimated uplink channel.

The uplink transmission-related information may include one or more of a rank indication of the uplink channel, a quantity of layers and a quantity of layers that are allocated by the base station to the terminal device for transmitting data, a modulation order and an MCS that are used by the terminal device for transmitting data, a code rate of channel coding of the terminal device, a DM-RS port of the terminal device, $P_{o,PUSCH}$, $M_{PUSCH}(i)$, and the like. For example, the base station determines, based on the rank indication of the estimated uplink channel, the quantity of layers and the quantity of layers that are allocated to the terminal device for transmitting data; and determines, based on a CQI, the modulation order and the MCS that are used by the terminal device for transmitting data, and the code rate of channel coding.

1007: The base station determines, based on the estimated uplink channel between the base station and the terminal device, precoding to be used by the terminal device.

For example, the base station obtains, based on estimated uplink channels between the base station and a plurality of terminal devices, uplink precoding matrices of the plurality of terminal devices by using a precoding algorithm like a WMMSE. Because a precoding design problem of multi-user and rate maximization is non-convex, the base station may use a local weighting and rate optimization method (WMMSE) based on alternating optimization to obtain a local optimal solution of the foregoing problem, namely, an uplink precoding matrix of each user. The base station may further determine, in another manner, the precoding to be used by the terminal device. This is not limited in embodiments of this application. A sequence of the step 1006 and the step 1007 is not limited.

1008: The base station obtains power control information to be used by the terminal device.

For the step 1008, refer to the step 803 or the step 903.

1009: The base station generates second information based on the precoding and the power control information to be used by the terminal device.

For the step 1009, refer to the step 904.

1010: The base station compresses the second information by using the precoding compression model, to obtain precoding information.

The step 1010 may be understood as an example in which the base station performs compression processing on precoding sent to a terminal device. It should be understood that the base station may compress precoding of each terminal device by using the precoding compression model.

1011: The base station sends a downlink reference signal to the terminal device.

The downlink reference signal may be a channel state information reference signal (channel state information reference signal, CSI-RS), or may be another signal like a synchronization signal/physical broadcast channel block (SS/PBCH block, SSB). This is not limited herein. For each terminal device, a plurality of reference signals may be configured, for example, four reference signals are configured. In this embodiment of this application, a case in which one reference signal is configured for the terminal device is considered.

1012: The base station sends first information and the uplink transmission-related information to the terminal device.

Correspondingly, the terminal device receives the first information and the uplink transmission-related information. The first information and the uplink transmission-related information may be carried in a same signal, or may be carried in different signals. A sequence of the step 1011 and the step 1012 is not limited.

1013: The terminal device processes precoding information in the first information by using the precoding recovery model, to obtain an uplink precoding matrix to be used by the terminal device.

1014: The terminal device obtains, based on the uplink precoding matrix to be used by the terminal device, the power control information to be used by the terminal device.

1015: The terminal device determines uplink transmit power based on the power control information and the uplink transmission-related information.

For example, a formula for determining, by the terminal device, the uplink transmit power based on the power control information and the uplink transmission-related information is as follows:

$$P_{PUSCH}(i) = min\{P_{CMAX}, P_{o,PUSCH} + 10\,log(M_{PUSCH}(i)) + \alpha \cdot PL + \Delta_{TF} + P_{precoding} + f(i)\}$$

$$(2)$$

$P_{CMAX}$ represents a maximum transmit power of the terminal device, $P_{o,PUSCH}$ represents a power level that is of a PUSCH of the terminal device and that is expected by the base station, $M_{PUSCH}(i)$ represents a transmission bandwidth of an $i^{th}$ PUSCH of the terminal device, $\alpha$ represents a path loss compensation factor, $PL$ represents a path loss, $\Delta_{TF}$ represents a power offset value of a different MCS relative to a reference MCS, $P_{precoding}$ represents power control information, $f(i)$ represents an adjustment amount of a PUSCH transmit power of the terminal device, and i is an integer greater than 0. For example, when the terminal device determines the uplink transmit power by using the formula (2), the base station may send a TCP command to the terminal device, so that the terminal device obtains $f(i)$.

For example, a formula for determining, by the terminal device, the uplink transmit power based on the power control information and the uplink transmission-related information may alternatively be as follows:

$$P_{PUSCH}(i) = min\{P_{CMAX}, P_{o,PUSCH} + 10\log(M_{PUSCH}(i)) + \alpha \cdot PL + \Delta_{TF} + P_{precoding}\} \quad (3)$$

$P_{CMAX}$ represents a maximum transmit power of the terminal device, $P_{o,PUSCH}$ represents a power level that is of a PUSCH of the terminal device and that is expected by the base station, $M_{PUSCH}(i)$ represents a transmission bandwidth of an $i^{th}$ PUSCH of the terminal device, $\alpha$ represents a path loss compensation factor, $PL$ represents a path loss, $\Delta_{TF}$ represents a power offset value of a different MCS relative to a reference MCS, $P_{precoding}$ represents power control information, the power control information represents an adjustment amount of a PUSCH transmit power of the terminal device, and i is an integer greater than 0. Optionally, precision of $P_{precoding}$ in the formula (3) is higher than precision of $f(i)$ in the formula (2). It may be understood that $P_{precoding}$ in the formula (3) is equivalent to a sum of $P_{precoding}$ and $f(i)$ in the formula (2). For example, when the terminal device determines the uplink transmit power by using the formula (3), the base station does not need to send a TCP command to the terminal device, so that signaling overheads can be reduced.

For example, the terminal device determines a path loss by using RSRP of a downlink reference signal. For example, the RSRP of the downlink reference signal and the path loss (namely, a path loss between the terminal device and the base station) received by the terminal device satisfy the following formula:

$$PL = P - 10\log_{10}\left(10^{\frac{RSRP}{10}}\right) \quad (4)$$

$P$ represents a transmit power of a reference signal, $PL$ represents the path loss between the terminal device and the base station, and $RSRP$ represents the RSRP of the downlink reference signal received by the terminal device. The following further describes specific descriptions of other parameters used by the terminal device to determine the uplink transmit power.

1016: The terminal device sends a precoded signal.

Before performing the step 1016, the terminal device may precode a to-be-sent signal X through precoding. The step 1016 may be replaced with the follows: The terminal device performs uplink transmission based on precoding delivered by the base station, and a transmit signal of the terminal device is S=VX, where X is unprecoded information, and V represents the precoding. For example, assuming that a signal to be sent by the terminal device is X, an uplink channel is H, an uplink precoding matrix is V, and noise is N, an uplink signal Y received by the base station is Y=HVX+N. A power of the precoded signal sent by the terminal device is the uplink transmit power determined by the terminal device in the step 1015.

In this embodiment of this application, the precoding and the power control information are jointly indicated by the precoding information, so that an uplink power indication with higher precision can be implemented, and signaling overheads can be reduced.

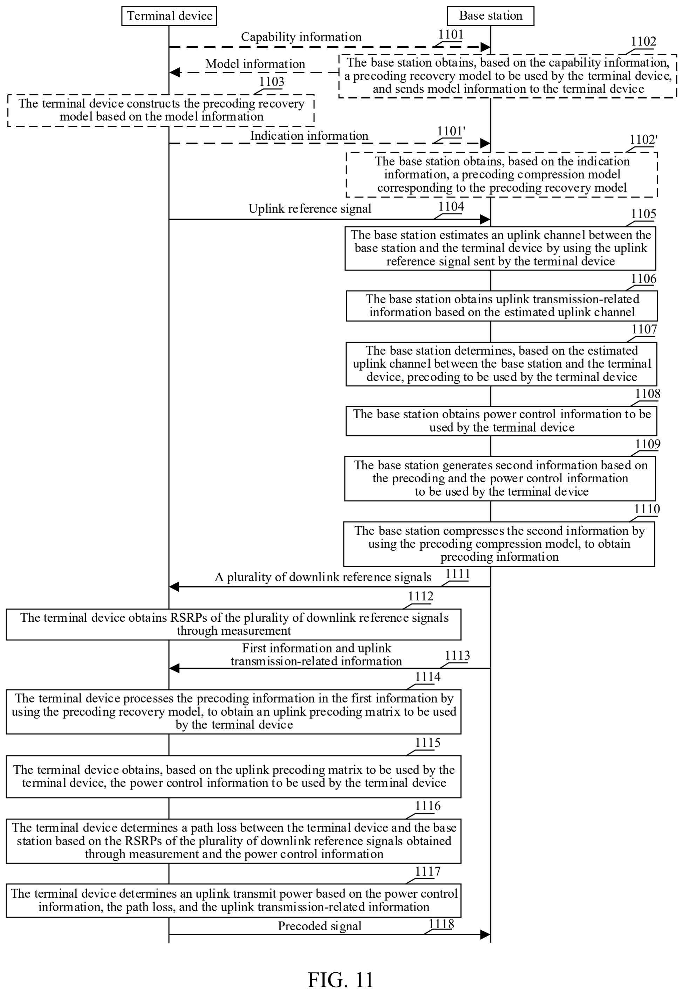

FIG. 11 is an interaction flowchart of another power control method according to an embodiment of this application. A method procedure in FIG. 11 is a possible implementation of the method described in FIG. 7. As shown in FIG. 11, the method includes the following steps.

1101: A terminal device sends capability information to a base station.

1102: The base station obtains, based on the capability information, a precoding recovery model to be used by the terminal device, and sends model information to the terminal device.

1103: The terminal device constructs the precoding recovery model based on the model information.

Step 1101': The terminal device sends indication information to the base station.

Step 1102': The base station obtains, based on the indication information, a precoding compression model corresponding to the precoding recovery model.

1104: The terminal device sends an uplink reference signal to the base station.

1105: The base station estimates an uplink channel between the base station and the terminal device by using an uplink reference signal sent by the terminal device.

1106: The base station obtains uplink transmission-related information based on the estimated uplink channel.

1107: The base station determines, based on the estimated uplink channel between the base station and the terminal device, precoding to be used by the terminal device.

1108: The base station obtains power control information to be used by the terminal device.

1109: The base station generates second information based on the precoding and the power control information to be used by the terminal device.

1110: The base station compresses the second information by using the precoding compression model, to obtain precoding information.

For the step 1001 to the step 1010, refer to the step 1001 to the step 1010 in FIG. 10. Details are not described herein again.

1111: The base station sends a plurality of downlink reference signals to the terminal device.

The downlink reference signal may be a channel state information reference signal (channel state information reference signal, CSI-RS), or may be another signal like an SSB. This is not limited herein. For each terminal device, the base station may configure a plurality of (for example, four) reference signals. In this embodiment of this application, a case in which a plurality of reference signals are configured for the terminal device is considered. When a measurement signal is configured for the terminal device or before a configuration parameter is provided in dedicated RRC signaling, the terminal device may use, as the measurement signal, an SSB selected in an initial access process.

1112: The terminal device obtains RSRPs of a plurality of downlink reference signals through measurement.

1113: The base station sends first information and the uplink transmission-related information to the terminal device.

Correspondingly, the terminal device receives the first information and the uplink transmission-related information. The first information and the uplink transmission-related information may be carried in a same signal or a same message, or may be carried in different signals or different messages. A sequence of the step 1013 and the step 1111 is not limited. For example, the first information includes a threshold, and the threshold is used to determine a path loss used by the terminal device. For example, the uplink transmission-related information includes a threshold, and the threshold is used to determine a path loss used by the terminal device. For example, the base station further sends third information to the terminal device, where the third information includes a threshold, and the threshold is used to determine a path loss used by the terminal device. In this embodiment of this application, information carried by the threshold is not limited, that is, a manner in which the base station provides the threshold for the terminal device is not limited. For example, the threshold is preconfigured by the terminal device. For example, the threshold is configured by using higher layer signaling or RRC signaling. In other words, neither the first information nor the uplink transmission-related information may include the threshold. The threshold may be different in different transmission scenarios. In other words, the base station may configure the threshold based on a transmission scenario. A specific range of the threshold is not limited in embodiments of this application. For example, a value range of the threshold may be [0.4, 0.8].

1114: The terminal device processes precoding information in the first information by using the precoding recovery model, to obtain an uplink precoding matrix to be used by the terminal device.

1115: The terminal device obtains, based on the uplink precoding matrix to be used by the terminal device, the power control information to be used by the terminal device.

1116: The terminal device determines a path loss between the terminal device and the base station based on the RSRPs of the plurality of downlink reference signals obtained through measurement and the power control information.

In a possible implementation, a path loss used to determine an uplink transmit power of the terminal device is related to the power control information. In other words, a path loss determining manner (namely, a manner for determining a path loss) used for determining the uplink transmit power of the terminal device is related to the power control information.

In a possible implementation, a path loss used to determine an uplink transmit power of the terminal device is related to the power control information and the threshold. In other words, a path loss determining manner used for determining the uplink transmit power of the terminal device is related to the power control information and the threshold. For example, the threshold is from the base station.

In a possible implementation, the path loss determining manner used for determining the uplink transmit power of the terminal device is determined based on a value relationship between the power control information and the threshold.

A possible implementation of the step 1116 is as follows: When the power control information is less than or equal to the threshold, the terminal device determines the path loss between the terminal device and the base station in (or by using) a first manner; or when the power control information is greater than the threshold, the terminal device determines the path loss between the terminal device and the base station in a second manner. The first manner is different from the second manner. An example of determining the path loss between the terminal device and the base station in the first manner is as follows: The path loss between the terminal device and the base station is determined based on an average value or a minimum value in the RSRPs of the plurality of downlink reference signals. Another example of determining the path loss between the terminal device and the base station in the first manner is as follows: The path loss between the terminal device and the base station is determined based on an average value of last u RSRPs in the RSRPs of the plurality of downlink reference signals sorted in order of values, where u is an integer greater than 1. An example of determining the path loss between the terminal device and the base station in the second manner is as follows: The path loss between the terminal device and the base station is determined based on a maximum value in the RSRPs of the plurality of downlink reference signals. Another example of determining the path loss between the terminal device and the base station in the second manner is as follows: The path loss between the terminal device and the base station is determined based on an average value of first m RSRPs in the RSRPs of the plurality of downlink reference signals sorted in order of values, where m is an integer greater than 1. For example, the base station determines the path loss between the terminal device and the base station by using the foregoing formula (4).

A possible implementation of the step 1116 may be understood as follows: The terminal device measures RSRPs of CSI-RSs by using a plurality of downlink reference channels, and calculates a plurality of $PL$; and the terminal device determines a magnitude of current uplink interference based on a relationship between $P_{precoding}$ and a threshold. When

$P_{precoding}$ is less than the threshold, it indicates that the terminal device needs large interference avoidance, and the terminal device determines that the uplink interference is large, and therefore *PL uses* an average value or a minimum value in the RSRPs; or when $P_{precoding}$ is greater than the threshold, it indicates that the terminal device needs small interference avoidance, and the terminal device determines that the uplink interference is small, and therefore *PL* uses a maximum value in the RSRPs. In this implementation, when the power control information is less than or equal to the threshold, the terminal device determines the path loss between the terminal device and the base station in (or by using) the first manner; or when the power control information is greater than the threshold, the terminal device determines the path loss between the terminal device and the base station in the second manner, so that an uplink throughput of the terminal device can be improved.

1117: The terminal device determines the uplink transmit power based on the power control information, the path loss, and the uplink transmission-related information.

For the step 1117, refer to the step 1015.

1118: The terminal device sends a precoded signal.

For the step 1118, refer to the step 1016.

In this embodiment of this application, the precoding and the power control information are jointly indicated by the precoding information (namely, the first information), so that an uplink power indication with higher precision can be implemented, and signaling overheads can be reduced.

In the foregoing embodiment, PUSCH power control is used as an example to describe the power control solution provided in this application. It should be understood that the power control solution provided in this application is also applicable to other uplink transmit power control, for example, physical uplink control channel (physical uplink control channel, PUCCH) power control and SRS power control. Examples are not described herein again.

The PUSCH is mainly used for uplink service data transmission, and can also be used to transmit hybrid automatic repeat request acknowledgments (hybrid automatic repeat request-ack, HARQ-ACK) and channel state information in some scenarios. In an NR system, a plurality of bandwidth parts (bandwidth part, BWP) may be configured for the terminal device, and a PUSCH is sent in one of the active BWPs. Power control parameters of different BWPs may be different. A transmit power of the terminal device on an $i^{th}$ PUSCH may be determined by using the foregoing formula (2) or formula (3).

Other parameters used by the terminal device to determine the uplink transmit power are specifically described as follows:

Parameters $P_{o,PUSCH}$ and $\alpha$ are configured as sets. Refer to a 3GPP protocol. A maximum of 32 parameter sets can be formed. Each $P_{o,PUSCH}$ includes two parameter values, which are respectively a common target receive power value of a cell, with a value range of {-202, -200, ..., 22, 24} dBm, and a target receive power value of a BWP corresponding to the terminal device, with a value range of {-16, -15, ..., 14, 15} dBm. A value range of $\alpha$ is {0, 0.4, 0.5, 0.6, 0.7, 0.8, 0.9, 1}.

*PL* represents a path loss, and a reference signal for measuring the path loss may be configured for the terminal device by using higher layer signaling. The reference signal for measuring the path loss may include one or more of a CSI-RS, a primary synchronization signal (primary synchronization signal, PSS)/secondary synchronization signal (secondary synchronization signal, SSS), and a DM-RS in a physical broadcast channel (physical broadcast channel, PBCH). One or more reference signals may be configured for each terminal device. For example, four reference signals are configured, or only one reference signal is configured. When a measurement signal is configured for the terminal device or before a configuration parameter is provided in dedicated RRC signaling, the terminal device may use, as the measurement signal, an SSB selected in an initial access process.

$\Delta_{TF}$ represents that different MCSs correspond to different power offsets. For example, when $K_s$ =1.25,

$$\Delta_{TF} = 10log_{10}((2^{BPRE \times K_s} - 1)\beta_{offset}^{PUSCH})$$ . Larger BPRE (Bits per resource element) represents a larger transmit power of the terminal device. When $K_s$ =0, $\Delta_{TF}$ = 0, representing that a function of performing power adjustment with an MCS is disabled. $K_s$ is indicated by higher layer signaling. When a quantity of data streams transmitted on the PUSCH is greater than 1, $\Delta_{TF}$ = 0. $K_s$ is a dedicated parameter deltaMCS of the terminal device, and is indicated by higher layer signaling. $K_s$ is used to determine a power offset. BPRE is a quantity of bits per resource element.

When the PUSCH includes data, $BPRE = \sum_{r=0}^{C-1} K_r / N_{RE}$ , where C represents a quantity of code blocks included in a data block transmitted by the PUSCH, $K_r$ is a length of an $r^{th}$ code block, and $N_{RE}$ is a quantity of REs used for transmission.

When the PUSCH includes only uplink control information (uplink control information, UCI), $BPRE = Q_m R / \beta_{offset}^{PUSCH}$ . $Q_m$ represents a modulation order, and $\beta_{offset}^{PUSCH}$ is used for sending on the PUSCH with UCI and without uplink service data, and is equal to 1 in another case, and R represents a target code rate.

$P_{precoding}$ represents precoding-based power control information. In this embodiment of this application, the base station may not explicitly indicate the power control information, for example, may implicitly indicate the power control information by using precoding sent by the base station. Because an implementation of the power control information implicitly indicated by the precoding is described in detail above, details are not described herein again.

It can be known from the foregoing descriptions that, the uplink precoding matrix solution in this application may also use an iterative precoding detection joint optimization (generic iterative algorithm, GIA) algorithm. The following describes an example of determining the uplink precoding matrix by using the iterative precoding detection joint optimization (generic iterative algorithm, GIA) algorithm.

For a multi-user (multi-user, MU) scenario, a detection signal for a user $k$ is:

$$\hat{\mathbf{s}}_k = \mathbf{G}_k (\mathbf{H}_k \mathbf{F}_k \mathbf{s}_k + \sum_{i \neq k} \mathbf{H}_i \mathbf{F}_i \mathbf{s}_i + \mathbf{n}) \qquad (5)$$

$G_k$ is a BS detection matrix, $s_k$ is a modulation signal of the user $k$, $F_k$ is precoding information of the user $k$, $H_k$ represents channel information of the user $k$, n represents noise, $s_i$ is a modulation signal of a user $i$, $F_i$ is precoding information of the user $i$, and $H_i$ represents channel information of the user $i$. The following optimization problems can be obtained by using a minimum mean square error (mean square error, MSE) criterion:

$$\eta_k = \sum_{k=1}^{K} E\left\{ \left( \hat{\mathbf{s}}_k - \mathbf{s}_k \right)^H \left( \hat{\mathbf{s}}_k - \mathbf{s}_k \right) \mid \mathbf{H}_i, \forall i \right\}$$
$$\min_{\mathbf{F}} \sum_{k=1}^{K} \eta_k \qquad (6)$$

A user power constraint condition and an antenna power constraint condition are as follows:

$$tr\left\{ \mathbf{F}_k \mathbf{\Phi}_{sk} \mathbf{F}_k^H \right\} = P_k, \quad \forall k \qquad (7)$$

$$\mathbf{e}_j^T (\mathbf{F}_k \mathbf{\Phi}_{sk} \mathbf{F}_k^H) \mathbf{e}_j = P_{k,j}, \ \forall k, j \qquad (8)$$

$\Phi_{sk}$ represents an autocorrelation matrix of a signal source, and $P_k$ and $P_{k,j}$ respectively represent a power allocated to the user $k$ under the user power constraint condition and a power allocated to an antenna $j$ of the user $k$ under the antenna power constraint condition. A Lagrange multiplier method can be used to resolve the foregoing problems. First, the following Lagrange function is constructed:

$$\xi_k = \eta_k + tr\left\{ \mathbf{\Lambda}_k \left( \mathbf{F}_k \mathbf{\Phi}_{sk} \mathbf{F}_k^H - \mathbf{P}_k \right) \right\} \qquad (9)$$

$\mathbf{P}_k$ is a power constraint matrix, a user power constraint is $\mathbf{P}_k = (P_k / N_{k,t})\mathbf{I}$, and an antenna power constraint is $\mathbf{P}_k = diag(P_{k,1}, ..., P_{k,N_{k,t}})$. $\mathbf{\Lambda}_k = diag[\lambda_{k,1}, ..., \lambda_{k,N_{k,t}}]$ represents an iterative Lagrange multiplier submatrix.

An example of iteratively resolving a better precoding matrix based on a crossed iterative optimization method is as follows: First, setting a partial derivative of a detection matrix to zero by using $\xi_k$, and updating a detection matrix; then, setting a partial derivative of a precoding matrix $\mathbf{F}_k$ to zero by using $\xi_k$, and obtaining a Lagrange multiplier submatrix expression by using a power constraint condition; and finally, substituting the obtained detection matrix and the Lagrange multiplier submatrix into an expression for setting a partial derivative of $\mathbf{F}_k$ to zero, to obtain an updated precoding matrix.

In conclusion, the following is specific steps of the algorithm: (1) initializing the precoding matrix; (2) setting the partial derivative of the detection matrix to zero, and iterating the detection matrix; (3) iterating the Lagrange multiplier submatrix; (4) iterating the precoding matrix; (5) repeating the steps (2) to (4) until the algorithm converges, and resolving the problem for each user based on the algorithm.

It should be noted that a manner in which the base station obtains an uplink precoding matrix of the user is not limited in this application. In other words, the base station may determine, in any manner, precoding to be used by the user, and then send the precoding information to the user.

The following describes, with reference to a simulation diagram, improvement of uplink performance in the power control solution provided in this application.

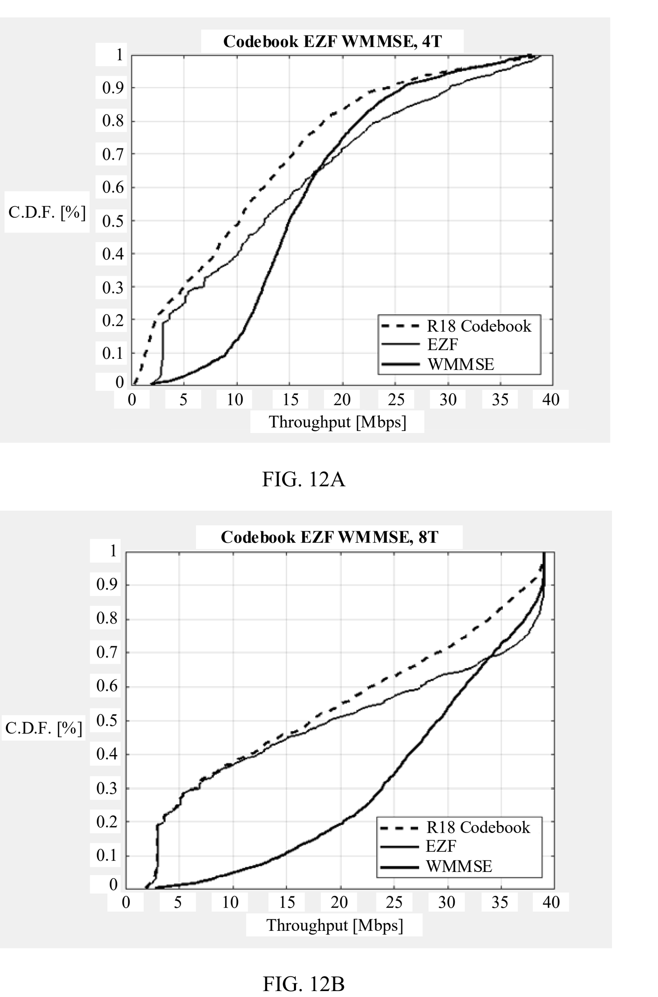

FIG. 12A and FIG. 12B are simulation diagrams of a cumulative distribution function (cumulative distribution function, CDF) of an uplink throughput according to an embodiment of this application. In FIG. 12A and FIG. 12B, in a power control solution (corresponding to a curve indicated by a WMMSE) provided in this application, a WMMSE algorithm is used to determine an uplink precoding matrix. FIG. 12A shows CCDFs of uplink throughputs for power control by separately using a power control solution provided in this application, an R18 codebook (codebook)-based power control solution, and an eigen zero forcing (eigen zero forcing, EZF) power control solution when an antenna quantity of a terminal device is 4. It can be learned from FIG. 12A that, the power control solution provided in this application improves performance by 1.42X compared with the R18 codebook-based power control solution, and improves performance by 1.17X compared with the EZF power control solution.

FIG. 12B shows CCDFs of uplink throughputs for power control by separately using a power control solution provided in this application, an R18 codebook-based power control solution, and an EZF power control solution when an antenna quantity of a terminal device is 8. It can be learned from FIG. 12B that, the power control solution provided in this application improves performance by 1.49X compared with the R18 codebook-based power control solution, and improves performance by 1.36X compared with the EZF power control solution. As shown in FIG. 12A and FIG. 12B, the terminal device performs power avoidance (comparison of performance of a WMMSE and EZF) based on inter-user interference, and adjusts and controls of a power of a cell center user (CDF>90%), so that interference to a cell edge user (CDF<10%) can be reduced, to increase a cell edge user capacity.

The following describes, with reference to the accompanying drawings, structures of communication apparatuses that can implement the communication methods provided in embodiments of this application. The following briefly describes only the communication apparatus. For details about solution implementation, refer to the descriptions in the foregoing method embodiments. Details are not described below again.

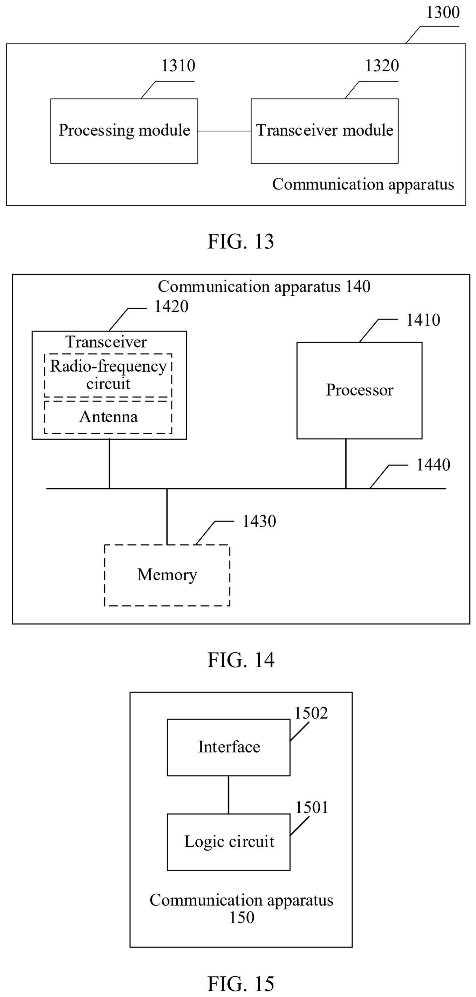

FIG. 13 is a diagram of a structure of a communication apparatus 1300 according to an embodiment of this application. The communication apparatus 1300 may accordingly implement functions or steps implemented by the terminal device in the foregoing method embodiments, or may accordingly implement functions or steps implemented by the base station in the foregoing method embodiments. The communication apparatus may include a processing module 1310 and a transceiver module 1320. In a possible implementation, the apparatus may further include a storage unit. The storage unit may be configured to store instructions (code or a program) and/or data. The processing module 1310 and the transceiver module 1320 may be coupled to the storage unit. For example, the processing module 1310 may read the instructions (the code or the program) and/or the data in the storage unit, to implement a corresponding method. The foregoing units may be independently disposed, or may be partially or completely integrated. For example, the transceiver module 1320 may include a sending module and a receiving module. The sending module may be a transmitter, and the receiving module may be a receiver. An entity corresponding to the transceiver module 1320 may be a transceiver, or may be a communication interface.

In some possible implementations, the communication apparatus 1300 can accordingly implement the behavior and the function of the terminal device in the foregoing method embodiments. For example, the communication apparatus 1300 may be a terminal device, or may be a component (for example, a chip or a circuit) used in the terminal device. The transceiver module 1320 may be, for example, configured to perform all receiving and sending operations performed by the terminal device in the embodiments in FIG. 7 to FIG. 11. The processing module 1310 is configured to perform all operations performed by the terminal device in the embodiments in FIG. 7 to FIG. 11 except the sending and receiving operations.

In some possible implementations, the communication apparatus 1300 can accordingly implement the behavior and the function of the base station in the foregoing method embodiments. For example, the communication apparatus 1300 may be a base station, or may be a component (for example, a chip or a circuit) used in the base station. The transceiver module 1320 may be, for example, configured to perform all receiving and sending operations performed by the base station in the embodiments in FIG. 7 to FIG. 11. The processing module 1310 is configured to perform all operations performed by the base station in the embodiments in FIG. 7 to FIG. 11 except the receiving and sending operations.

FIG. 14 is a diagram of a structure of another communication apparatus 140 according to an embodiment of this application. The communication apparatus in FIG. 14 may be the foregoing terminal device, or may be the foregoing base station. As shown in FIG. 14, the communication apparatus 140 includes at least one processor 1410 and a transceiver 1420.

In some embodiments of this application, the processor 1410 and the transceiver 1420 may be configured to perform the function, the operation, or the like performed by the terminal device. The transceiver 1420 is, for example, configured to perform all receiving and sending operations performed by the terminal device in the embodiments in FIG. 7 to FIG. 11. The processor 1410 is, for example, configured to perform all operations performed by the terminal device in the embodiments in FIG. 7 to FIG. 11 except the sending and receiving operations.

In some embodiments of this application, the processor 1410 and the transceiver 1420 may be configured to perform the function, the operation, or the like performed by the base station. The transceiver 1420 is, for example, configured to perform all receiving and sending operations performed by the base station in the embodiments in FIG. 7 to FIG. 11. The processor 1410 is, for example, configured to perform all operations performed by the base station in the embodiments in FIG. 7 to FIG. 11 except the sending and receiving operations.

The transceiver 1420 is configured to communicate with another device/apparatus through a transmission medium. The processor 1410 receives and sends data and/or signaling through the transceiver 1420, and is configured to implement the method in the foregoing method embodiments. The processor 1410 may implement the function of the processing module 1310, and the transceiver 1420 may implement the function of the transceiver module 1320. Optionally, the transceiver 1420 may include a radio frequency circuit and an antenna. The radio frequency circuit is mainly configured to perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user.

Optionally, the communication apparatus 140 may further include at least one memory 1430, configured to store program instructions and/or data. The memory 1430 is coupled to the processor 1410. The coupling in embodiments of this application may be indirect coupling or a communication connection between apparatuses, units, or modules in an electrical form, a mechanical form, or another form, and is used for information exchange between the apparatuses, the units, or the modules. The processor 1410 may perform an operation with the memory 1430 cooperatively. The processor 1410 may execute the program instructions stored in the memory 1430. At least one of the at least one memory may be included in the processor.

The processor 1410 may read a software program in the memory 1430, interpret and execute instructions of the software program, and process data of the software program. When data needs to be sent in a wireless manner, the processor 1410 performs baseband processing on the to-be-sent data, and then outputs a baseband signal to the radio frequency circuit. The radio frequency circuit performs radio frequency processing on the baseband signal, and then sends, through the antenna, a radio frequency signal in an electromagnetic wave form. When data is sent to the communication apparatus, the radio frequency circuit receives a radio frequency signal through the antenna, converts the radio frequency signal into a baseband signal, and outputs the baseband signal to the processor 1410. The processor 1410 converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

A specific connection medium between the transceiver 1420, the processor 1410, and the memory 1430 is not limited in this embodiment of this application. In this embodiment of this application, the memory 1430, the processor 1410, and the transceiver 1420 are connected through a bus 1440 in FIG. 14. The bus is represented by using a thick line in FIG. 14. A connection manner between other components is merely an example for description, and is not limited thereto. The bus may be classified into an address bus, a data bus, a control bus, and the like. For ease of representation, only one thick line is used to represent the bus in FIG. 14, but this does not indicate that there is only one bus or only one type of bus.

In embodiments of this application, the processor may be one of the following components: a general-purpose processor, a digital signal processor, an application-specific integrated circuit, a field-programmable gate array or another programmable logic device, a discrete gate or a transistor logic device, a discrete hardware component, or all or some circuits used for processing functions in the foregoing components. The processor may implement or perform the methods, the steps, and the logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

FIG. 15 is a diagram of a structure of another communication apparatus 150 according to an embodiment of this application. The communication apparatus in FIG. 15 may be the foregoing terminal device or a chip used for the foregoing terminal device, or may be the foregoing base station or a chip used for the foregoing base station. As shown in FIG. 15, the communication apparatus shown in FIG. 15 includes a logic circuit 1501 and an interface 1502. The processing module 1310 in FIG. 13 may be implemented by using the logic circuit 1501, and the transceiver module 1320 in FIG. 13 may be implemented by using the interface 1502. The logic circuit 1501 may be a chip, a processing circuit, an integrated circuit, a system-on-chip (system-on-chip, SoC), or the like, and the interface 1502 may be a communication interface, an input/output interface, or the like. In this embodiment of this application, the logic circuit and the interface may be coupled to each other. A specific manner of connection between the logical circuit and the interface is not limited in this embodiment of this application.

In some embodiments of this application, the logic circuit and the interface may be configured to perform a function, an operation, or the like performed by the terminal device.

In some embodiments of this application, the logic circuit and the interface may be configured to perform the function, the operation, or the like performed by the foregoing base station.

This application further provides a computer-readable storage medium. The computer-readable storage medium stores a computer program or instructions. When the computer program or the instructions are run on a computer, the computer is enabled to perform the method in the foregoing embodiment.

This application further provides a computer program product. The computer program product includes instructions or a computer program. When the instructions or the computer program is run on a computer, the method in the foregoing embodiments is performed.

This application further provides a communication system, including the foregoing base station and the foregoing terminal device.

This application further provides a chip. The chip includes a communication interface and a processor. The communication interface is configured to receive/send a signal of the chip, and the processor is configured to execute computer program instructions, so that a communication apparatus including the chip performs the method in the foregoing embodiments.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or instructions are loaded and executed on a computer, the procedures or the functions described in embodiments of this application are all or partially performed. The computer may be a general-purpose computer, a dedicated computer, a computer network, a network device, user equipment, or another programmable apparatus. The computer programs or the instructions may be stored in the computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk drive, or a magnetic tape, may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

**Claims**

1.  A power control method, comprising:

    generating first information, wherein the first information comprises precoding information, the precoding information is used to determine an uplink precoding matrix and power control information to be used by a terminal device, and the power control information is used to determine an uplink transmit power of the terminal device; and
    sending the first information.

2.  The method according to claim 1, wherein a modulus of the uplink precoding matrix is associated with the power control information.

3.  The method according to claim 1 or 2, wherein before generating the first information, the method further comprises: compressing second information by using a precoding compression model, to obtain the precoding information, wherein the second information comprises the uplink precoding matrix.

4.  The method according to claim 3, wherein the method further comprises:

    receiving capability information from the terminal device; and
    obtaining, based on the capability information, a precoding recovery model to be used by the terminal device, and sending model information to the terminal device, wherein the model information is used for constructing the precoding recovery model, and the precoding recovery model corresponds to the precoding compression model.

5.  The method according to claim 3, wherein the method further comprises:

    receiving indication information from the terminal device, wherein the indication information indicates a precoding recovery model used by the terminal device; and
    obtaining, based on the indication information, the precoding compression model corresponding to the precoding recovery model.

6. The method according to any one of claims 1 to 5, wherein the method further comprises:
sending third information, wherein the third information comprises a threshold, and the threshold is used to determine a path loss used by the terminal device.

7. A power control method, comprising:

receiving first information, wherein the first information comprises precoding information, the precoding information is used to determine an uplink precoding matrix and power control information to be used by a terminal device, and the power control information is used to determine an uplink transmit power of the terminal device; and
obtaining the uplink precoding matrix and the power control information based on the first information.

8. The method according to claim 7, wherein a modulus of the uplink precoding matrix is associated with the power control information.

9. The method according to claim 8, wherein obtaining the uplink precoding matrix and the power control information based on the first information comprises:

parsing the first information to obtain the uplink precoding matrix; and
obtaining the power control information based on the uplink precoding matrix.

10. The method according to claim 8, wherein obtaining the uplink precoding matrix and the power control information based on the first information comprises:

processing the precoding information by using a precoding recovery model, to obtain the uplink precoding matrix, wherein the precoding information is obtained by compressing second information by using a precoding compression model, the second information comprises the uplink precoding matrix, and the precoding recovery model corresponds to the precoding compression model; and
obtaining the power control information based on the uplink precoding matrix.

11. The method according to claim 10, wherein the method further comprises:

sending capability information, wherein the capability information is used to determine the precoding recovery model used by the terminal device; and
receiving model information, wherein the model information is used to construct the precoding recovery model used by the terminal device.

12. The method according to claim 10, wherein the method further comprises:
sending indication information, wherein the indication information indicates the precoding recovery model used by the terminal device.

13. The method according to any one of claims 7 to 12, wherein a path loss used to determine the uplink transmit power of the terminal device is related to the power control information.

14. The method according to claim 13, wherein the method further comprises:

obtaining, through measurement, reference signal received powers RSRPs of a plurality of downlink reference signals; and
when the power control information is less than or equal to a threshold, determining the path loss in a first manner, and determining the uplink transmit power based on the path loss and the power control information; or
when the power control information is greater than the threshold, determining the path loss in a second manner, and determining the uplink transmit power based on the path loss and the power control information, wherein the second manner is different from the first manner.

15. The method according to claim 14, wherein the method further comprises:
receiving third information comprising the threshold.

16. A communication apparatus, comprising a module configured to implement the method according to any one of claims 1 to 6 or any one of claims 7 to 15.

17. A computer program product, wherein when the computer program product runs on a computer, the computer is enabled to perform the method according to any one of claims 1 to 6 or the method according to any one of claims 7 to 15.

FIG. 1

FIG. 2

FIG. 3

FIG. 4A

FIG. 4B

FIG. 4C

FIG. 4D

FIG. 5

FIG. 6

FIG. 7

```
┌─────────────┐                                    ┌──────────────┐
│  Terminal   │                                    │ Base station │
│   device    │                                    └──────────────┘
└─────────────┘                                            │
      │                                                    │        801
      │                                        ┌────────────────────────────┐
      │                                        │ The base station estimates an uplink │
      │                                        │ channel between the base station and the │
      │                                        │      terminal device       │
      │                                        └────────────────────────────┘
      │                                                    │        802
      │                                        ┌────────────────────────────┐
      │                                        │ The base station determines, based on │
      │                                        │  the estimated uplink channel between │
      │                                        │ the base station and the terminal device, │
      │                                        │   precoding to be used by the terminal │
      │                                        │            device           │
      │                                        └────────────────────────────┘
      │                                                    │        803
      │                                        ┌────────────────────────────┐
      │                                        │ The base station obtains power control │
      │                                        │ information to be used by the terminal │
      │                                        │            device           │
      │                                        └────────────────────────────┘
      │                                                    │        804
      │                                        ┌────────────────────────────┐
      │                                        │  The base station generates first │
      │                                        │ information based on the precoding and │
      │                                        │ the power control information to be used │
      │                                        │      by the terminal device │
      │                                        └────────────────────────────┘
      │          First information        805              │
      │◄───────────────────────────────────────────────────│
      │  806                                               │
┌────────────────────────────┐                             │
│ The terminal device obtains an uplink │                  │
│   precoding matrix and the power │                       │
│ control information based on the first │                 │
│         information         │                             │
└────────────────────────────┘                             │
      │                                                    │
```

FIG. 8

| Terminal device | | Base station |
|---|---|---|

901

A base station estimates an uplink channel between the base station and the terminal device

902

The base station determines, based on the estimated uplink channel between the base station and the terminal device, precoding to be used by the terminal device

903

The base station obtains power control information to be used by the terminal device

904

The base station generates second information based on the precoding and the power control information to be used by the terminal device

905

The base station compresses the second information by using a precoding compression model, to obtain precoding information

First information 906

907

The terminal device processes the precoding information in the first information by using a precoding recovery model, to obtain an uplink precoding matrix to be used by the terminal device

908

The terminal device obtains, based on the uplink precoding matrix to be used by the terminal device, the power control information to be used by the terminal device

FIG. 9

| Terminal device | | Base station |
|---|---|---|

Capability information — 1001 →

1002

The base station obtains, based on the capability information, a precoding recovery model to be used by the terminal device, and sends model information to the terminal device

← Model information

1003

The terminal device constructs the precoding recovery model based on the model information

Indication information — 1001' →

1002'

The base station obtains, based on the indication information, a precoding compression model corresponding to the precoding recovery model

Uplink reference signal — 1004 →

1005

The base station estimates an uplink channel between the base station and the terminal device by using the uplink reference signal sent by the terminal device

1006

The base station obtains uplink transmission-related information based on the estimated uplink channel

1007

The base station determines, based on the estimated uplink channel between the base station and the terminal device, precoding to be used by the terminal device

1008

The base station obtains power control information to be used by the terminal device

1009

The base station generates second information based on the precoding and the power control information to be used by the terminal device

1010

The base station compresses the second information by using the precoding compression model, to obtain precoding information

← Downlink reference signal — 1011

← First information and uplink transmission-related information — 1012

1013

The terminal device processes the precoding information in the first information by using the precoding recovery model, to obtain an uplink precoding matrix to be used by the terminal device

1014

The terminal device obtains, based on the uplink precoding matrix to be used by the terminal device, the power control information to be used by the terminal device

1015

The terminal device determines an uplink transmit power based on the power control information and the uplink transmission-related information

Precoded signal — 1016 →

FIG. 10

| Terminal device | | Base station |
|---|---|---|

Capability information — 1101 →

1102
The base station obtains, based on the capability information, a precoding recovery model to be used by the terminal device, and sends model information to the terminal device

← Model information
1103

The terminal device constructs the precoding recovery model based on the model information

Indication information — 1101' →

1102'
The base station obtains, based on the indication information, a precoding compression model corresponding to the precoding recovery model

Uplink reference signal — 1104 →

1105
The base station estimates an uplink channel between the base station and the terminal device by using the uplink reference signal sent by the terminal device

1106
The base station obtains uplink transmission-related information based on the estimated uplink channel

1107
The base station determines, based on the estimated uplink channel between the base station and the terminal device, precoding to be used by the terminal device

1108
The base station obtains power control information to be used by the terminal device

1109
The base station generates second information based on the precoding and the power control information to be used by the terminal device

1110
The base station compresses the second information by using the precoding compression model, to obtain precoding information

← A plurality of downlink reference signals  1111

1112
The terminal device obtains RSRPs of the plurality of downlink reference signals through measurement

← First information and uplink transmission-related information  1113

1114
The terminal device processes the precoding information in the first information by using the precoding recovery model, to obtain an uplink precoding matrix to be used by the terminal device

1115
The terminal device obtains, based on the uplink precoding matrix to be used by the terminal device, the power control information to be used by the terminal device

1116
The terminal device determines a path loss between the terminal device and the base station based on the RSRPs of the plurality of downlink reference signals obtained through measurement and the power control information

1117
The terminal device determines an uplink transmit power based on the power control information, the path loss, and the uplink transmission-related information

Precoded signal — 1118 →

FIG. 11

FIG. 12A

FIG. 12B

1300

Processing module 1310

Transceiver module 1320

Communication apparatus

FIG. 13

Communication apparatus 140

Transceiver 1420

Radio-frequency circuit

Antenna

Processor 1410

1440

Memory 1430

FIG. 14

Interface 1502

Logic circuit 1501

Communication apparatus 150

FIG. 15

## INTERNATIONAL SEARCH REPORT

| International application No. |
| --- |
| **PCT/CN2024/105027** |

**A. CLASSIFICATION OF SUBJECT MATTER**

H04W52/06(2009.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXTC, DWPI, CNKI, IEEE, 3GPP: 功率控制, 功控, TPC, PC, 预编码, 联合, 关联, 对应, 映射, 指示, 上行, 模, power control, precod+, pre-cod+, joint, associat+, correspond+, map+, indicat+, uplink, UL, modulus

**C. DOCUMENTS CONSIDERED TO BE RELEVANT**

| Category* | Citation of document, with indication, where appropriate, of the relevant passages | Relevant to claim No. |
| --- | --- | --- |
| X | CN 113596975 A (HUAWEI TECHNOLOGIES CO., LTD.) 02 November 2021 (2021-11-02) description, paragraphs [0061]-[0076] | 1, 2, 6-9, 13-17 |
| X | US 2023180134 A1 (HUAWEI TECHNOLOGIES CO., LTD.) 08 June 2023 (2023-06-08) description, paragraphs [0176]-[0232] | 1, 2, 6-9, 13-17 |
| A | US 2017201950 A1 (HUAWEI TECHNOLOGIES CO., LTD.) 13 July 2017 (2017-07-13) entire document | 1-17 |
| A | US 2022007298 A1 (DATANG MOBILE COMMUNICATIONS EQUIPMENT CO., LTD.) 06 January 2022 (2022-01-06) entire document | 1-17 |
| A | US 2023189159 A1 (QUALCOMM INC.) 15 June 2023 (2023-06-15) entire document | 1-17 |
| A | WO 2023097542 A1 (QUALCOMM INC.) 08 June 2023 (2023-06-08) entire document | 1-17 |

☑ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **04 September 2024** | **10 September 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/105027** |

| C. | DOCUMENTS CONSIDERED TO BE RELEVANT | |
| --- | --- | --- |
| Category* | Citation of document, with indication, where appropriate, of the relevant passages | Relevant to claim No. |
| A | ERICSSON. "On Full Power UL Transmission" <br> *3GPP TSG RAN WG1 Meeting #96-Bis, R1-1904847,* 12 April 2019 (2019-04-12), <br> entire document | 1-17 |

Form PCT/ISA/210 (second sheet) (July 2022)

**INTERNATIONAL SEARCH REPORT**
Information on patent family members

International application No.

**PCT/CN2024/105027**

| Patent document cited in search report | | | Publication date (day/month/year) | Patent family member(s) | | | Publication date (day/month/year) |
|---|---|---|---|---|---|---|---|
| CN | 113596975 | A | 02 November 2021 | WO | 2021219125 | A1 | 04 November 2021 |
| | | | | AU | 2021266008 | A1 | 17 November 2022 |
| | | | | IN | 202227059516 | A | 25 November 2022 |
| | | | | EP | 4135421 | A1 | 15 February 2023 |
| | | | | US | 2023047985 | A1 | 16 February 2023 |
| | | | | RU | 2796253 | C1 | 18 May 2023 |
| US | 2023180134 | A1 | 08 June 2023 | EP | 4120751 | A1 | 18 January 2023 |
| | | | | WO | 2021203445 | A1 | 14 October 2021 |
| | | | | IN | 202227058546 | A | 18 November 2022 |
| | | | | CN | 115380578 | A | 22 November 2022 |
| US | 2017201950 | A1 | 13 July 2017 | US | 2018376430 | A1 | 27 December 2018 |
| | | | | EP | 3764703 | A1 | 13 January 2021 |
| | | | | EP | 3190839 | A1 | 12 July 2017 |
| | | | | WO | 2016045130 | A1 | 31 March 2016 |
| | | | | CN | 105745975 | A | 06 July 2016 |
| | | | | CN | 108811064 | A | 13 November 2018 |
| | | | | CN | 108924919 | A | 30 November 2018 |
| | | | | CN | 112533272 | A | 19 March 2021 |
| US | 2022007298 | A1 | 06 January 2022 | KR | 20210088701 | A | 14 July 2021 |
| | | | | EP | 3883303 | A1 | 22 September 2021 |
| | | | | KR | 20230058561 | A | 03 May 2023 |
| | | | | WO | 2020098631 | A1 | 22 May 2020 |
| | | | | CN | 111182619 | A | 19 May 2020 |
| US | 2023189159 | A1 | 15 June 2023 | WO | 2023113964 | A1 | 22 June 2023 |
| | | | | IN | 202427027207 | A | 14 June 2024 |
| WO | 2023097542 | A1 | 08 June 2023 | IN | 202447018138 | A | 29 March 2024 |

Form PCT/ISA/210 (patent family annex) (July 2022)

**EP 4 738 944 A1**

**REFERENCES CITED IN THE DESCRIPTION**

**Patent documents cited in the description**

- CN 202310882514